# FASCICULE DE BREVET EUROPEEN

(11) **EP 2 986 125 B1**
(45) Date de publication et mention de la délivrance du brevet: **31.07.2019**
(21) Numéro de dépôt: 14711947.3
(22) Date de dépôt: 14.03.2014
(51) Int. Cl.: A21D 13/068, A23L 3/3463, A21D 2/16, A21D 13/066, A23P 10/20, A23P 10/22, A23P 10/40, A23L 17/10, A23L 35/00, A21D 13/40, A21D 2/18, A21D 2/36, A23L 29/212, A23L 33/00, A23L 17/60, A23D 7/005, A23L 3/46, A21D 13/06, A23L 33/20

(54) **GRAISSE VÉGÉTALE À BASE DE FARINE DE MICROALGUES ET SON UTILISATION EN BOULANGERIE ET PÂTISSERIE**
PFLANZLICHES FETTPRODUKT MIT MIKROALGENMEHL UND DESSEN VERWENDUNG FÜR DIE HERSTELLUNG VON BACKWAREN
VEGETAL FAT PRODUCT COMPRISING MICROALGAL FLOUR AND ITS USE IN BAKERY

(30) Priorité: 15.03.2013 EP 13159385; 01.07.2013 FR 1356390
(43) Date de publication de la demande: 24.02.2016
(73) Titulaire: Corbion Biotech, Inc., South San Francisco, CA 94080 (US)
(72) Inventeur: DELEBARRE, Marie, F-62136 La Couture (FR); BOURSIER, Thomas, F-59370 Mons en Baroeul (FR); VARLAMOFF, Caroline, F-59112 Annoeullin (FR)
(74) Mandataire: Lebrette, Camille
(86) Numéro de dépôt international: PCT/EP2014/055060
(87) Numéro de publication internationale: WO 2014/140244

(56) Documents cités:
- EP-A1- 2 183 977
- EP-A2- 0 622 027
- WO-A1-2010/120923
- WO-A1-2011/150411
- WO-A2-2006/122299
- US-A1- 2002 068 110
- US-A1- 2011 256 282
- "Algal flour (Chlorella) GRAS notice", Solazyme , 16 mars 2010 (2010-03-16), pages 3-75, XP002724923, Extrait de l'Internet: URL:http://www.fda.gov/ucm/groups/fdagov-p ublic/@fdagov-foods-gen/documents/document /ucm269513.pdf [extrait le 2014-05-23]
- DATABASE WPI Week 2013 Thomson Scientific, London, GB; AN 2013-e16999 XP002725042, & ES 2 378 102 A1 9 avril 2012 (2012-04-09)

## Description

### DOMAINE DE L'INVENTION

La présente invention concerne un beurre végétal sous forme de pâte, obtenu à partir de matières premières non animales, apte à se substituer totalement ou partiellement aux matières grasses d'origine végétale et/ou animale, et plus particulièrement aux matières grasses d'origine animale comme le beurre, ainsi que ses utilisations comme produits nouveaux dans les domaines de la boulangerie et/ou de la pâtisserie et/ou de la viennoiserie.

### ARRIERE-PLAN TECHNOLOGIQUE

Les produits de biscuiterie-pâtisserie sont extrêmement nombreux (plus de 800 références). Les formulations bien que très nombreuses renferment souvent les mêmes ingrédients de base : de la farine, du sucre, des oeufs et des matières grasses d'origine animale et/ou végétale. Généralement, les pâtisseries se définissent comme des préparations sucrées de pâte travaillée et cuite au four et/ou dans un moule, de formes et de garnitures variées (crème, fruits) et englobent entre autre les gâteaux et les tartes. De plus, les pâtisseries sont consommées soit sous forme de dessert en fin de repas, soit à l'occasion de collation en cours de journée (notamment à l'occasion d'un goûter ou d'un thé).

En parallèle de la pâtisserie, on appelle viennoiseries les produits de boulangerie dont la technique de fabrication se rapproche de celle du pain ou de la pâte feuilletée, mais auxquels leurs ingrédients donnent un caractère plus gras et plus sucré qui les rapproche de la pâtisserie (oeufs, beurre et/ou matières grasses végétales, lait, crème, sucre, etc.). De plus, très souvent, les pâtes sont levées ou feuilletées.

Par essence, les pâtisseries et viennoiseries sont souvent riches en glucides simples et en matières grasses, notamment saturées (résultant principalement des graisses laitières). Or, les recommandations de santé publiques encouragent fortement à limiter la consommation de sucre, d'aliments riches en sucre et/ou en matières grasses.

Pourtant, les matières grasses d'origine animale et/ou végétale jouent un rôle important dans les produits destinés à la boulangerie, pâtisserie et viennoiserie. Non seulement elles révèlent et véhiculent l'arôme des produits finis, mais elles déterminent le résultat d'une série de caractéristiques techniques telles que par exemple, la friabilité d'un croissant ou le bon goût riche d'un gâteau au beurre. On les sait caloriques et selon leur origine pas forcément très bonnes pour la santé, et pourtant, impossible de s'en passer tant leur double rôle technique et gustatif est important, voire primordial sur le résultat final du produit.

De plus, il est tout de même nécessaire de consommer une certaine quantité de matières grasses quotidiennement pour assurer le bon fonctionnement de notre organisme. Par exemple, les huiles et les lipides apportent des calories et des acides gras essentiels qui aident l'organisme à absorber les vitamines liposolubles comme les vitamines A, D, E et K. Le type de lipide consommé est aussi important pour la santé que la quantité consommée.

C'est pourquoi il est fortement recommandé de choisir des lipides insaturés connus pour être de bons lipides. Consommer trop de lipides du mauvais type, comme les lipides saturés et les lipides trans, peut faire élever les taux de cholestérol LDL (Low Density Lipoprotein ou « mauvais » cholestérol) et réduire ceux du cholestérol HDL (High Density Lipoprotein ou « bon » cholestérol). Ce déséquilibre peut faire augmenter les risques d'hypertension artérielle, de rétrécissement des artères (athérosclérose), de crise cardiaque et d'AVC (Accident Vasculaire Cérébral).

Parmi les lipides insaturés, on distingue les lipides monoinsaturés et les polyinsaturés. Il a été démontré que les matières grasses monoinsaturées améliorent les taux de cholestérol sanguins. On les retrouve dans l'huile d'olive, de canola et d'arachide, dans la margarine non hydrogénée, dans les avocats et dans certaines noix comme les amandes, les pistaches, les noix de cajou, les pacanes et les noisettes. Les matières grasses polyinsaturées aident l'organisme à se débarrasser du cholestérol récemment produit. Parmi celles-ci, on retrouve les oméga-3, qui peuvent prévenir les caillots sanguins, réduire le risque de subir un AVC et aussi réduire les triglycérides, un type de matières grasses dans le sang lié aux maladies du coeur. Les meilleures sources d'oméga-3 sont les poissons d'eau froide, de même que les huiles de canola et de soja, les oeufs riches en oméga-3, les graines de lin, les noix de Grenoble, les pacanes et les pignons. On retrouve aussi dans cette catégorie de matières grasses les oméga-6 qui aident à réduire le cholestérol LDL, mais dont une trop grande consommation peut également réduire le cholestérol HDL. Il faut donc les consommer avec modération. On les retrouve dans les huiles de carthame, de tournesol et de maïs, les margarines non hydrogénées, les noix tels que les amandes, les pacanes, les noix du Brésil et les graines de tournesol. De nombreux plats préparés en contiennent également.

En parallèle, on trouve les lipides saturés que l'on retrouve le plus fréquemment dans les viandes grasses, les produits laitiers entiers, le beurre, le saindoux, l'huile de noix de coco et l'huile de palme. Ces matières grasses peuvent augmenter le « mauvais » cholestérol LDL. Tout comme les matières grasses saturées, les lipides trans font augmenter le cholestérol LDL. Les lipides trans se retrouvent dans les margarines partiellement hydrogénées, les aliments frits des comptoirs de restauration rapide (frites, beignes) et dans de nombreux craquelins, biscuits et produits de pâtisserie commerciale.

De ce qui précède, nous pouvons retenir que les matières grasses rendent les aliments plus savoureux et sont indispensables à notre santé. Mais, que consommées en excès, elles peuvent avoir des effets négatifs, notamment sur le système cardiaque et vasculaire. Le beurre, les nombreuses huiles végétales et les lipides contenus dans les aliments sont des matières grasses différentes. Le beurre et les produits qui le contiennent, comme par exemple les pâtisseries et les viennoiseries, apportent surtout des matières grasses dites saturées. Lorsqu'elles sont trop abondantes dans nos assiettes, elles peuvent conduire à une augmentation du mauvais cholestérol. Les huiles végétales apportent des acides gras essentiels. Il est intéressant d'utiliser des huiles différentes pour bénéficier de leurs avantages complémentaires.

Et pourtant, il n'est pas aussi simple de substituer le beurre dans les pâtisseries et les viennoiseries. Le beurre permet d'assouplir la pâte mais aussi de l'alourdir. Il rend la mie plus moelleuse et la croûte plus fine et fondante, apporte un goût bien particulier et un côté savoureux très appréciés des consommateurs en quête de produits de qualité et d'authenticité. Il isole les particules des autres ingrédients qui ne peuvent se lier entre elles. Sans lui, le produit devient friable.

Ainsi, dans l'art antérieur, des solutions ont été décrites pour substituer le beurre par des matières grasses ayant une image plus positive en termes de santé, comme par exemple des matières grasses d'origine végétale. Par contre, les produits obtenus sont souvent décrits comme étant fades et comme ayant une texture peu, voire pas, feuilletée pour les croissants par exemple.

Ainsi, les solutions connues de l'art antérieur conduisent très souvent à des produits présentant une qualité finale moindre, en termes de texture et de goût notamment.

Le document « Algal flour (Chlorella) GRAS notice » divulgue une farine de microalgues riche en lipides ou riche en protéines, qui peut être utilisée comme ingrédients dans différents aliments.

Le document US2011/256282 divulgue des compositions alimentaires intégrant de la farine de microalgues riche en lipides et protéines.

Le document WO2011/150411 divulgue une farine de microalgues destinée à être utilisée dans des préparations culinaires en remplacement des matières grasses usuelles.

Le document WO2006/122299 divulgue une huile de poisson stabilisée au moyen d'un extrait d'algues brut.

Le document US2002/068110 divulgue une composition diététique comprenant un mélange de carraghènane, alginate, Chlorelles, Spiruline, agar et d'eau.

Le document EP 0 622 027 divulgue un ingrédient alimentaire à base de microalgues riches en acide docosahexanoïque (DHA).

Il existe donc un réel besoin pour remplacer partiellement ou totalement les matières grasses d'origine animale et/ou végétale dans des recettes de produits de boulangerie, pâtisserie et viennoiserie, de façon à diminuer la charge calorique et l'apport de mauvaises graisses. Les solutions proposées doivent résulter dans des produits présentant les mêmes qualités organoleptiques que les produits dits traditionnels. Par ailleurs, les solutions proposées doivent pouvoir être mise en oeuvre par les hommes du métier sans changement drastique des recettes et de préférence à grande échelle, sur des productions en ligne.

### RESUME DE L'INVENTION

Forte de ce constat et après de nombreux travaux de recherche, la société Demanderesse a eu le mérite de répondre à toutes les exigences requises et a trouvé qu'un tel but pouvait être atteint dès lors que l'on utilise une farine de microalgues en tant qu'ingrédient dans la formulation d'un beurre dit végétal apte à se substituer partiellement ou totalement aux matières grasses d'origine végétale et/ou animale, et plus particulièrement aux matières grasses d'origine animale comme le beurre, tout en maintenant les qualités finales du produit obtenu.

Il est donc du mérite de la Demanderesse d'avoir découvert qu'un beurre végétal contenant de la farine de microalgues, un liquide potable et un agent rétrogradant choisi parmi les amidons natifs, les amidons modifiés et/ou les hydrolysats d'amidon. pouvait, de façon surprenante et inattendue par rapport aux prérequis de l'art antérieur, remplacer avantageusement les matières grasses d'origine animale et/ou végétale dans des produits de boulangerie, pâtisserie et viennoiserie, tout en conservant les qualités organoleptiques, en particulier gustatives, olfactives, visuelles et tactiles, au moins équivalentes voire supérieures, à celles des produits de cuisson traditionnels contenant ces ingrédients.

La présente invention concerne un beurre végétal caractérisé en ce qu'il contient de la farine de microalgues, un liquide potable et un agent rétrogradant choisi parmi les amidons natifs, les amidons modifiés et/ou les hydrolysats d'amidon.

De préférence, ledit beurre est caractérisé en ce que l'agent rétrogradant est une maltodextrine, de préférence une maltodextrine possédant un DE inférieur à 10, et encore plus préférentiellement une maltodextrine possédant un DE inférieur à 5.

Selon l'invention, le beurre végétal est caractérisé en ce qu'il contient en particulier de 0,5 à 50% de farine de microalgues, de 5 à 80% de liquide potable et de 0,5 à 50% d'un agent rétrogradant, de préférence de 5 à 20% de farine de microalgues, de 50 à 75% de liquide potable et de 5 à 20% d'un agent rétrogradant.

Par ailleurs, le beurre peut également être caractérisé en ce que le liquide potable est choisi parmi l'eau, les jus de fruits, les nectars de fruits, les jus de légumes, les nectars de légumes, les sodas, et de préférence de l'eau.

Dans un mode de réalisation particulier, le beurre est caractérisé en ce que la farine de microalgues est sous forme de granules possédant une ou plusieurs des caractéristiques suivantes, de préférence les trois :
- une distribution granulométrique monomodale, mesurée sur un granulomètre laser LS de marque COULTER®, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2.000 µm, comprises entre 0,5 et 60 % en poids pour le refus à 1.400 µm et comprises entre et 0,5 et 95 % en poids pour le refus à 800 µm,
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

De préférence, la farine de microalgues est une farine dans laquelle les microalgues sont du genre *Chlorella,* et plus particulièrement de l'espèce *Chlorella protothecoides.*

De préférence, la biomasse de microalgues contient au moins 12%, au moins 25%, au moins 50%, ou au moins 75% en poids sec de lipides.

Un autre aspect de l'invention concerne également un procédé de préparation d'un beurre végétal tel que décrit dans le présent document, caractérisé en ce qu'il comprend:
- un mélange d'une farine de microalgues, d'un liquide potable et d'un agent rétrogradant choisi parmi les amidons natifs, les amidons modifiés et/ou les hydrolysats d'amidon, jusqu'à dissolution complète, et
- un stockage au froid.

Ledit procédé peut être en outre caractérisé en ce qu'il comprend :
- un premier mélange d'une farine de microalgues et d'un agent rétrogradant, et de préférence une maltodextrine, une maltodextrine possédant un DE inférieur à 10, et plus préférentiellement encore une maltodextrine possédant un DE inférieur à 5,
- une dissolution du mélange précédent dans de l'eau sous agitation jusqu'à dispersion complète,
- un stockage à une température inférieure à 10°C et de préférence inférieure à 5°C pendant une durée supérieure à 5 heures, et de préférence supérieure à 10 heures.

Dans un mode de réalisation particulier de l'invention, le procédé de préparation d'un beurre végétal est caractérisé en ce qu'il comprend de 0,5 à 50% de farine de microalgues, de 5 à 80% de liquide potable et de 0,5 à 50% d'un agent rétrogradant, de préférence de 5 à 20% de farine de microalgues, de 50 à 75% de liquide potable et de 5 à 20% d'un agent rétrogradant. Un autre aspect de la présente invention concerne un procédé de préparation d'un produit de boulangerie, pâtisserie et/ou viennoiserie caractérisé en ce qu'il contient ce beurre végétal en substitution partielle ou totale des matières grasses d'origine animale et/ou végétale.

Ledit procédé de préparation d'un produit de boulangerie est également caractérisé en ce qu'il comprend :
- un mélange des différents ingrédients jusqu'à l'obtention d'une pâte, et
- une cuisson de ladite pâte.

### DESCRIPTION DETAILLEE DES MODES DE REALISATION

Ainsi, la présente invention a pour objet un beurre végétal caractérisé en ce qu'il contient de la farine de microalgues, un liquide potable et un agent rétrogradant choisi parmi les amidons natifs, les amidons modifiés et/ou les hydrolysats d'amidon.

Dans la présente demande, la dénomination « beurre végétal » utilisée doit être comprise dans son interprétation la plus large et comme désignant une matière grasse ne contenant pas de protéine d'origine animale, contenant de la farine de microalgues, pouvant se substituer aux matières grasses d'origine animale et/ou végétale traditionnellement employées dans les domaines de la boulangerie, pâtisserie et viennoiserie. Le beurre végétal est généralement sous forme de solide mou à température ambiante. De préférence, dans le contexte du présent document, le beurre comprend au minimum 5% de matière grasse, de préférence 10% ou 20%.

Selon l'invention, le beurre comprend de 1 à 50% de matières grasses, exprimés en poids sec. Dans un mode plus préféré, le beurre végétal selon l'invention comprend de 5 à 15% de matières grasses.

Selon un mode préférentiel, ladite matière grasse du beurre végétal est constituée majoritairement de triglycérides, entre 85 et 99,5%, exprimés en poids sec. A ces triglycérides, s'ajoutent de 0,05 à 1% de monoglycérides, de 0,1 à 1,5% de diglycérides, de 0,1 à 1,2% d'acides gras libres, de 0,05 à 1% de stérols et tocophérols et de 0,05 à 2% de phospholipides.

Au sens de l'invention, le terme « liquide potable » doit être compris dans son interprétation la plus large et comme désignant par exemple, et de manière non limitative, l'eau, les jus de fruits, les nectars de fruits, les jus de légumes, les nectars de légumes, les sodas.

Selon un mode préféré de l'invention, le liquide potable est de l'eau, ladite eau pouvant être de l'eau de source, de l'eau minérale, gazéifiée naturellement ou par adjonction de gaz carbonique ou non gazéifiée.

Selon l'invention, ledit beurre végétal est caractérisé en ce que l'agent rétrogradant est choisi parmi les amidons natifs, les amidons modifiés et/ou les hydrolysats d'amidon.

Au sens de la présente invention, ledit amidon est issu d'une ou plusieurs variétés botaniques choisies parmi les céréales, les légumineuses, les tubercules ainsi que les fruits.

Selon un mode préférentiel, ledit amidon est issu du blé, du maïs, de l'orge, du riz, de la pomme de terre, du pois, du tapioca, du manioc, du sorgho et de leurs mélanges quelconques. Les variétés botaniques peuvent être, selon la présente invention, sauvages ou hybrides et donc avoir subis des modifications génétiques pour modifier leur génome.

Depuis toujours, les amidons sont utilisés dans l'industrie alimentaire, non seulement comme ingrédient nutritif mais également comme agent épaississant, liant stabilisant ou gélifiant. Synthétisé par voie biochimique, source d'hydrate de carbone, l'amidon est l'une des matières organiques les plus répandues du monde végétal, où il constitue la réserve nutritionnelle des organismes.

Il se présente sous forme de grains de 1 à 100 microns. Leur taille et leur forme sont caractéristiques de leur origine végétale.

Il est d'usage de distinguer les amidons de céréales des amidons de tubercules. Les amidons peuvent être employés tel quel (amidon natif) ou après modifications (chimiques et/ou physiques) : amidons modifiés ou amidons prégélatinisés ou hydrolysés. Ces traitements ont pour effet de faire varier leurs qualités.

Dans un mode de réalisation préféré de l'invention, ledit beurre végétal est caractérisé en ce que l'agent rétrogradant est choisi parmi les hydrolysats d'amidon.

Dans la présente invention, le terme « hydrolysat d'amidon » désigne tout produit obtenu par hydrolyse acide ou enzymatique d'amidon de légumineuses, de céréales ou de tubercules. Divers procédés d'hydrolyse sont connus et ont été décrits de manière générale aux pages 511 et 512 de l'ouvrage « Encyclopedia of Chemical Technology de Kirk-Othmer, 3ème Edition, Vol. 22, 1978 ». Ces produits d'hydrolyse se définissent également comme des mélanges purifiés et concentrés formés de chaînes linéaires constituées d'unités D-glucose et de polymères de D-glucose essentiellement lié en α(1-4) avec seulement de 4 à 5 % de liaisons glucosidiques ramifiées α(1-6), de poids moléculaires extrêmement variés, complètement solubles dans l'eau. Les hydrolysats d'amidon sont très bien connus et parfaitement décrits dans « Encyclopedia of Chemical Technology de Kirk-Othmer, 3ème Edition, Vol. 22, 1978, pp. 499 à 521 ».

Ainsi, dans la présente invention, le produit d'hydrolyse de l'amidon est choisi parmi les maltodextrines, les sirops de glucose, le dextrose (forme cristallisée du α-D-glucose) et leurs mélanges quelconques.

La distinction entre les produits d'hydrolyse de l'amidon repose principalement sur la mesure de leur pouvoir réducteur, exprimé classiquement par la notion de Dextrose Equivalent ou DE. Le DE correspond à la quantité de sucres réducteurs, exprimée en équivalent dextrose pour 100g de matière sèche du produit. Le DE mesure donc l'intensité de l'hydrolyse de l'amidon, puisque plus le produit est hydrolysé, plus il contient de petites molécules (telles que le dextrose et le maltose par exemple) et plus son DE est élevé. Au contraire, plus le produit contient de grandes molécules (polysaccharides), plus son DE est bas.

Du point de vue réglementaire, et également au sens de la présente invention, les maltodextrines ont un DE compris de 1 à 20, et les sirops de glucose ont un DE supérieur à 20.

De tels produits sont par exemple les maltodextrines et les sirops de glucose déshydratés commercialisés par la Demanderesse sous les dénominations de GLUCIDEX® (DE disponibles = 1, 2, 6, 9, 12, 17, 19 pour les maltodextrines et DE = 21, 29, 33, 38, 39, 40, 47 pour les sirops de glucose). On peut également citer les sirops de glucose commercialisés par la Demanderesse sous la dénomination « Roquette sirops de glucose ».

Selon un mode de réalisation avantageux de la présente invention, ledit beurre végétal est caractérisé en ce que l'agent rétrogradant est une maltodextrine, de préférence une maltodextrine possédant un DE inférieur à 10, et plus préférentiellement encore une maltodextrine possédant un DE inférieur à 5.

Dans un mode préféré de l'invention, la maltodextrine a un DE de 1.

La présente invention concerne donc un beurre végétal contenant de la farine de microalgues, un liquide potable et un agent rétrogradant choisi parmi les amidons natifs, les amidons modifiés et/ou les hydrolysats d'amidon, et apte à se substituer totalement ou partiellement aux matières grasses d'origine végétale et/ou animale, et plus particulièrement aux matières grasses d'origine animale comme le beurre dans des produits alimentaires, et plus particulièrement dans des produits de boulangerie, pâtisserie ou viennoiserie.

Par « totalement » est entendu que le produit de boulangerie, pâtisserie ou viennoiserie ne comprend plus de matières grasses d'origine végétale et/ou animale, de préférence même à l'état de trace. Par « partiellement » est entendu que, en comparaison de la recette utilisée, la teneur en l'ingrédient remplacé est diminuée d'au moins 10, 20, 30, 40, 50, 60, 70, 80 ou 90 % en poids, par exemple d'environ 10, 20, 30, 40, 50, 60, 70, 80 ou 90 % en poids.

Le beurre végétal de la présente invention est caractérisé en ce qu'il comprend ou contient de 0,5 à 50% de farine de microalgues, de 5 à 80% de liquide potable et de 0,5 à 50% d'un agent rétrogradant.

Dans un mode préféré de réalisation de l'invention, le beurre végétal comprend ou contient de 5 à 20% de farine de microalgues, de 50 à 75% de liquide potable et de 5 à 20% d'un agent rétrogradant.

Dans un mode encore plus préféré, le beurre végétal comprend ou contient 5 à 20% de farine de microalgues, de 60 à 75% d'eau et de 5 à 20% de maltodextrines.

Les pourcentages indiqués sont des pourcentages en poids de beurre végétal.

Le beurre végétal selon l'invention contient de la farine de microalgues, notamment au minimum 0,5, 1, 5, 10, 15 ou 20 % en poids du beurre végétal. Dans un mode de réalisation préféré, il est à noter que le beurre végétal selon l'invention ne comprend pas d'autres sources de lipides significatives (c'est-à-dire représentant plus de 10, 5, 1 ou 0,5 % des lipides présents dans le beurre végétal) que ceux apportés par la farine de microalgues.

Dans un mode de réalisation préféré, la somme des composants consistant en la farine de microalgues, le liquide potable et l'agent rétrogradant représente au minimum 80, 85, 90, 95 ou 99 % en poids du beurre végétal. Dans un mode de réalisation très particulier, la somme des composants consistant en la farine de microalgues, le liquide potable et l'agent rétrogradant représente au minimum 95 ou 99 % en poids du beurre végétal.

De préférence, le beurre végétal selon la présente invention comprend moins de 10, 5, ou 1 % de matière grasse d'origine animale. De préférence, il en est dénué.

Les algues font partie des premiers organismes apparus sur Terre, et sont définies comme des organismes eucaryotes dépourvus de racines, de tige et de feuille, mais possédant de la chlorophylle ainsi que d'autres pigments accessoires à la photosynthèse productrice d'oxygène. Elles sont bleues, rouges, jaunes, doré et brun ou encore vertes. Elles représentent plus de 90% des végétaux marins et 18% du règne végétal, avec leurs 40 000 à 45 000 espèces. Les algues sont des organismes extrêmement variés tant par leur taille et leur forme que par leur structure cellulaire. Elles vivent en milieu aquatique ou très humide. Elles contiennent de nombreuses vitamines et oligo-éléments, et sont de véritables concentrés d'actifs stimulants et bienfaisants pour la santé et la beauté. Elles ont des vertus anti-inflammatoires, hydratantes, adoucissantes, régénérantes, raffermissantes, anti-âge. Elles possèdent également des caractéristiques "technologiques" qui permettent d'apporter de la texture à un produit alimentaire. En effet, les fameux additifs E400 à E407 ne sont en fait que des composés extraits d'algues, dont on utilise les propriétés épaississantes, gélifiantes, émulsifiantes et stabilisantes.

Parmi les algues, on peut distinguer les macroalgues et les microalgues, notamment algues microscopiques unicellulaires, photosynthétiques ou non, d'origine marine ou non, cultivées notamment pour leurs applications en Bio-carburant ou dans le domaine alimentaire. Par exemple, la spiruline (Arthrospira platensis) est cultivée dans des lagunes ouvertes (en phototrophie) pour une utilisation comme complément alimentaire ou incorporée en petites quantités dans des confiseries ou des boissons (généralement moins de 0,5 % p/p). D'autres microalgues riches en lipides, y compris certaines espèces de Chlorella, sont également très populaires dans les pays asiatiques comme compléments alimentaires (citons les microalgues du genre Crypthecodinium ou Schizochytrium). La production et l'utilisation de farines de microalgues est décrite dans les demandes WO 2010/120923 et WO 2010/045368.

Au sens de la présente invention, le terme « farine de microalgues » doit être compris dans son interprétation la plus large et comme désignant par exemple, une composition comprenant une pluralité de particules de biomasse de microalgues. La biomasse de microalgues est dérivée de cellules de microalgues, qui peuvent être entières ou cassées, ou un mélange de cellules entières et cassées. Il est entendu dans le présent document que la farine de microalgues désigne un produit essentiellement composé de biomasse de microalgues, c'est-à-dire à au moins 90, 95, 99%. Dans un mode de réalisation préféré, la farine de microalgues comprend uniquement de la biomasse de microalgues.

Le terme "farine de microalgues" est ainsi relatif à la biomasse de microalgues propre à la consommation humaine qui est riche en nutriments, notamment en lipides et / ou protéines.

Est aussi décrite (mais ne faisant pas partie de l'invention) une farine de microalgues qui peut être incorporée dans les produits alimentaires dans lesquels la teneur en lipides et / ou en protéines de la farine de microalgues peut se substituer en totalité ou en partie pour les huiles et / ou matières grasses et / ou protéines présentes dans les produits alimentaires conventionnels.

La fraction lipidique de la farine de microalgues, qui peut se composer essentiellement d'huiles monoinsaturées, fournit ainsi des avantages nutritionnels et de santé par rapport aux huiles saturées, hydrogénées et polyinsaturées souvent trouvées dans les produits alimentaires conventionnels.

La fraction protéique de la farine de microalgues qui renferme beaucoup d'acides aminés essentiels au bien-être humain et animal fournit donc également des avantages nutritionnels et santé intéressants et non négligeables.

Au sens de l'invention, les microalgues considérées sont les espèces qui produisent des huiles appropriées et / ou des lipides et / ou des protéines.

Selon l'invention, la biomasse de microalgues comprend au moins 10% en poids sec de lipides, de préférence au moins 12% et encore plus préférentiellement de 25 à 35% ou plus en poids sec de lipides.

Ainsi, selon la présente invention, l'expression « riche en lipides » doit être interprétée comme se référant à des teneurs d'au moins 10% en poids sec de lipides, de préférence d'au moins 12% en poids sec de lipides et encore plus préférentiellement des teneurs d'au moins 25 à 35% ou plus en poids sec de lipides.

Selon un mode préférentiel de l'invention, la biomasse de microalgues contient au moins 12% ; au moins 25%, au moins 50%, ou au moins 75% en poids sec de lipides.

Selon un autre mode de réalisation de l'invention, la biomasse de microalgues contient au moins 30% en poids sec de protéines, au moins 40%, ou au moins 45% en poids sec de protéines.

Ainsi, selon la recette du produit, le boulanger pâtissier pourra choisir d'incorporer à sa recette de produit de cuisson plutôt une farine de microalgues présentant une teneur élevée en lipides ou plutôt une farine de microalgues algues présentant une teneur élevée en protéines, une farine de microalgues présentant à la fois une teneur élevée en lipides et protéines, ou encore un mélange des deux types de farines de microalgues.

Selon un autre mode préférentiel de l'invention, les microalgues appartiennent au genre Chlorella.

La chlorelle (ou Chlorella) est une algue unicellulaire verte microscopique ou microalgue d'eau douce apparue sur la terre depuis plus de 3 milliards d'années, appartenant à l'embranchement des Chlorophytes. La chlorelle possède la plus grande concentration en chlorophylle de tous les végétaux, et sa capacité à la photosynthèse est considérable. Depuis sa découverte, la chlorelle n'a cessé de générer un intérêt considérable dans le monde, et aujourd'hui elle est produite à grande échelle pour des utilisations dans des compléments alimentaires et nutritionnels. En effet, la chlorelle contient plus de 60% de protéines qui renferment beaucoup d'acides aminés essentiels au bien-être humain et animal. La chlorelle contient également beaucoup de vitamines (A, Bêta carotène, B1 : thiamine, B2 : riboflavine, B3 : niacine, B5 : acide pantothénique, B6 : pyridoxine, B9 : acide folique, B12 : cobalamine, vitamine C : acide ascorbique, vitamine E : tocophérol, vitamine K : phylloquinone), de lutéine (famille des caroténoïdes, puissant antioxydant), et de minéraux dont le calcium, le fer, le phosphore, le manganèse, le potassium, le cuivre et le zinc. En outre, la chlorelle contient certains acides gras polyinsaturés de type oméga indispensables au bon fonctionnement cardiaque et cérébral et à la prévention de nombreuses maladies comme le cancer, le diabète ou l'obésité.

Les bienfaits rapportés à la consommation de chlorelle sont très nombreux. C'est un complément alimentaire utilisé quotidiennement au Japon par 4 millions de personnes. A tel point que le gouvernement japonais l'a classée comme « aliment d'intérêt national ».

Facultativement, les microalgues utilisées peuvent être choisies, et de manière non-exhaustive, parmi les *Chlorella protothecoides, Chlorella kessleri, Chlorella minutissima, Chlorella sp., Chlorella sorokiniama, Chlorella luteoviridis, Chlorella vulgaris, Chlorella reisiglii, Chlorella ellipsoidea, Chlorella saccarophila, Parachlorella kessleri, Parachlorella beijerinkii, Prototheca stagnora et Prototheca moriformis.* De manière préférée, les microalgues utilisées selon l'invention appartiennent à l'espèce *Chlorella protothecoides.*

Dans le cadre de l'invention, *Chlorella protothecoides* est choisie en raison de sa composition élevée en lipides.

Dans un mode de réalisation secondaire, *Chlorella protothecoides* est également choisie en raison de sa composition élevée en protéines.

Dans la farine de microalgues, les parois cellulaires des microalgues et/ou les débris cellulaires de ces dernières peuvent optionnellement encapsuler les lipides au moins jusqu'à ce que le produit alimentaire la contenant soit cuit, ce qui augmente la durée de vie des lipides.

La farine de microalgues fournit également d'autres bénéfices, comme des micronutriments, des fibres alimentaires (glucides solubles et insolubles), des phospholipides, des glycoprotéines, des phytostérols, tocophérols, tocotriénols, et du sélénium.

Les microalgues peuvent être modifiées de manière à réduire la production de pigments, voire à l'inhiber totalement. Par exemple, Chlorella protothecoides peut être modifiée par mutagenèses par UV et/ou chimique de manière à être réduite ou dénuée en pigments.

Il peut en effet être particulièrement intéressant d'avoir des microalgues dépourvues de pigment de façon à éviter l'obtention d'une couleur verte plus ou moins marquée dans les produits de cuisson dans lesquels la farine de microalgues est employée.

Comme les microalgues sont destinées à la production de farine destinées à des formulations alimentaires, selon un mode préféré de réalisation de l'invention, les microalgues ne subissent aucune modification génétique comme par exemple mutagénèse, transgénèse, génie génétique et/ou chimique. Ainsi, les microalgues n'ont pas subi de modifications de leur génome par quelque technique de biologie moléculaire que ce soit.

Selon ce mode préféré, les algues destinées à la production de la farine de microalgues possèdent le statut GRAS. Le concept GRAS (Generally Recognized As Safe) créé en 1958 par la Food and Drug Administration (FDA) permet la régulation de substances ou extraits ajoutés aux aliments et qui sont considérés comme sans danger par un panel d'expert.

Les conditions appropriées de culture à utiliser sont notamment décrites dans l'article d'Ikuro Shihira-Ishikawa et Eiji Hase, « Nutritional Control of Cell Pigmentation in Chlorella protothecoides with special reference to the degeneration of chloroplast induced by glucose », Plant and Cell Physiology, 5, 1964.

Cet article décrit notamment que tous les grades de couleur peuvent être produits par Chlorella protothecoides (incolore, jaune, vert jaunâtre et vert), en faisant varier les sources et les ratios d'azote et de carbone. En particulier, des cellules « délavées » et « incolores » sont obtenues en utilisant des milieux de culture riches en glucose et pauvres en azote. La distinction entre cellules incolores et cellules jaunes est faite dans cet article. De plus, les cellules délavées cultivées en excès de glucose et en azote limité possèdent de fort taux de croissance. De plus, ces cellules contiennent de fortes quantités de lipides.

D'autres articles tel que celui de Han Xu, Xiaoling Miao, Qingyu Wu , « High quality biodiesel production from a microalga Chlorella protothecoides by heterotrophic growth in fermenters », Journal of Biotechnoloy, 126, (2006), 499-507 décrivent que des conditions de culture hétérotrophiques, c'est-à-dire en absence de lumière permettent d'obtenir une biomasse élevée avec une teneur élevée en lipides dans les cellules de microalgues.

Les milieux de croissance solides et liquides sont généralement disponibles dans la littérature, et les recommandations pour la préparation des milieux particuliers qui conviennent à une grande variété de souches de microorganismes peuvent être trouvées, par exemple, en ligne à www.utex.org/, un site maintenu par l'Université du Texas à Austin pour sa collection de culture d'algues (UTEX).

Au vu de ses connaissances générales et de l'état de l'art précité, l'homme du métier chargé de cultiver les cellules de microalgues sera tout à fait capable d'adapter les conditions de culture afin d'obtenir une biomasse nombreuse, riche en protéines et/ou en lipides et dépourvue soit en totalité soit de façon atténuée de pigments chlorophylliens.

Les microalgues sont cultivées en milieu liquide pour produire la biomasse en tant que telle.

Les microalgues sont cultivées dans un milieu contenant une source de carbone et une source d'azote, soit en présence de lumière, soit en absence de lumière.

Selon un mode préféré, les microalgues sont cultivées dans un milieu contenant une source de carbone et une source d'azote en absence de lumière (conditions hétérotrophiques).

La production de biomasse est réalisée en fermenteurs (ou bioréacteurs). Les exemples spécifiques de bioréacteurs, les conditions de culture, et la croissance hétérotrophe et les méthodes de propagation peuvent être combinés de toute manière appropriée pour améliorer l'efficacité de la croissance microbienne et des lipides et / ou de production de protéines. Pour préparer la biomasse pour une utilisation dans des compositions alimentaires, la biomasse obtenue en fin de fermentation est concentrée ou récoltée, du milieu de fermentation. Au moment de la récolte de la biomasse de microalgues du milieu de fermentation, la biomasse comprend des cellules intactes pour l'essentiel en suspension dans un milieu de culture aqueux.

Pour concentrer la biomasse, on procède alors à une étape de séparation solide-liquide, par filtration, par centrifugation ou par tout moyen connu par ailleurs de l'homme du métier. Après concentration, la biomasse de microalgues peut être traitée afin de produire des gâteaux emballés sous vide, des paillettes d'algues, des homogénats d'algues, de la poudre d'algues, de la farine d'algues, ou de l'huile d'algues.

On procède également au séchage de la biomasse de microalgues pour faciliter le traitement ultérieur ou pour une utilisation de la biomasse dans ses différentes applications, notamment alimentaires.

Différentes textures et saveurs peuvent être conférées à des produits alimentaires, selon que la biomasse algale est séchée, et si oui, en fonction de la méthode de séchage mise en oeuvre. Se référer aux brevets US 6.607.900 et US 6.372.460 pour des exemples.

La farine de microalgues peut être préparée à partir de la biomasse de microalgues concentrée qui a été mécaniquement lysée et homogénéisée, l'homogénat étant ensuite atomisé ou flash-séché.

Les cellules utilisées pour la production de farine de microalgues sont lysées pour libérer leur huile ou lipides. Les parois cellulaires et les composants intracellulaires sont broyés ou réduits, par exemple grâce à un homogénéisateur, en particules ou débris cellulaires non agglomérés. Selon un mode préférentiel de l'invention, les particules résultantes possèdent une taille moyenne inférieure à 500 µm, 100 µm ou même 10 µm ou moins.

Les cellules lysées peuvent également être séchées.

Par exemple, un disrupteur à pression peut être utilisé pour pomper une suspension contenant les cellules à travers un orifice restreint pour lyser les cellules. Une pression élevée (jusqu'à 1500 bars) est appliquée, suivie d'une expansion instantanée à travers une buse. Le cassage des cellules peut être réalisé par trois mécanismes différents : empiètement sur la vanne, cisaillement élevé du liquide dans l'orifice, et chute de pression soudaine en sortie, provoquant une explosion de la cellule.

La méthode libère des molécules intracellulaires.

Un homogénéisateur NIRO (GEA NIRO SOAVI) (ou tout autre homogénéisateur haute pression) peut être utilisé pour casser des cellules.

Ce traitement de la biomasse algale sous haute pression (environ 1500 bars) lyse généralement plus de 90 % des cellules et réduit la taille des particules à moins de 5 microns.

La pression appliquée est de 900 bars à 1200 bars. De manière préférentielle la pression appliquée est de 1100 bars.

Afin d'augmenter le pourcentage de cellules lysées, la biomasse de microalgues peut subir un double traitement à haute pression, voire plus (triple traitement, ..).

Selon un mode préféré, une double homogénéisation est utilisée afin d'augmenter le pourcentage de cellules lysées supérieur à 50%, supérieur à 75% ou supérieur à 90%. Le pourcentage de cellules lysées d'environ 95% a été observé grâce à ce double traitement. La lyse des cellules de microalgues est optionnelle mais préférée lorsqu'une farine riche en lipides (e.g ; supérieure à 10%) est souhaitée.

La farine de microalgues peut être sous la forme de cellules non lysées.

Ou une lyse partielle est souhaitée, c'est-à-dire que la farine de microalgues est sous la forme de cellules partiellement lysées et contient de 25% à 75% de cellules lysées.

Ou encore une lyse maximale voire totale est souhaitée, c'est-à-dire que la farine de microalgues est sous la forme de cellules fortement voire totalement lysées et contient 85% ou plus de cellules lysées, de préférence plus de 90%.

Ainsi la farine de microalgue est susceptible d'être sous une forme non broyée jusqu'à une forme extrêmement broyée avec des taux de broyage supérieurs à 95%. Des exemples spécifiques portent sur des farines de microalgues présentant des taux de broyage de 50%, 85% ou 95 % de lyse des cellules, de préférence 85% ou 95 %.

Dans un autre mode de réalisation (ne faisant pas partie de l'invention) une farine de microalgues riche en protéines est produite. Cette farine de microalgues riches en protéines peut être sous la forme de cellules non lysées (cellules intactes non lysées et non broyées).

De manière alternative, un broyeur à billes est plutôt utilisé. Dans ce type de broyeur, les cellules sont agitées en suspension avec de petites particules abrasives. Le cassage des cellules est provoqué par les forces de cisaillement, le broyage entre les billes, et les collisions avec des billes. En fait, ces billes cassent les cellules pour en libérer le contenu cellulaire. La description d'un broyeur à billes approprié est par exemple faite dans le brevet US 5.330.913. On obtient une suspension de particules, optionnellement de plus petite taille que les cellules d'origine sous la forme d'une émulsion « huile dans eau ». Cette émulsion peut ensuite être atomisée et l'eau est éliminée, laissant une poudre sèche contenant les débris cellulaires et les lipides. Après séchage, la teneur en eau ou l'humidité de la poudre est généralement inférieure à 10 %, préférentiellement inférieure à 5% et de façon plus préférée inférieure à 3% en poids.

Cependant, renfermant de l'huile à une teneur de 10%, 25% voire 50 % en poids de la poudre sèche, on peut déplorer l'obtention d'une poudre sèche d'aspect collante, qui s'écoule difficilement. Différents agents d'écoulement (y compris les produits dérivés de la silice) doivent alors être ajoutés. Il peut être également rencontré des problèmes de dispersibilité dans l'eau des farines de biomasse séchées, présentant alors de moins bonnes propriétés de mouillabilité.

La société Demanderesse a mis au point des granules de farine de microalgues (ne faisant pas partie de l'invention) présentant une distribution granulométrique particulière, des propriétés d'écoulement et de mouillabilité remarquables. Notamment, ces granules permettent de stabiliser la farine de microalgues, et de permettre leur incorporation aisée, à grande échelle, dans des produits alimentaires qui doivent rester savoureux et nutritifs.

Les granules de farine de microalgues du beurre végétal conforme à l'invention sont ainsi caractérisés en ce qu'ils possèdent une ou plusieurs des caractéristiques suivantes :
- une distribution granulométrique monomodale, mesurée sur un granulomètre laser LS de marque COULTER®, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2.000 µm, comprises entre 0,5 et 60 % en poids pour le refus à 1.400 µm et comprises entre et 0,5 et 95 % en poids pour le refus à 800 µm,
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

De préférence, les granules de farine de microalgues possèdent deux de ces caractéristiques, et de manière encore plus préférée les trois caractéristiques. Selon un mode de réalisation avantageux de l'invention, les granules de farine de microalgues sont caractérisés en ce qu'ils possèdent au moins les trois caractéristiques citées ci-dessus.

Les granules de farine de microalgues peuvent être d'abord caractérisés par leur distribution granulométrique, et particulièrement sur leur diamètre de particule. Cette mesure est réalisée sur un granulomètre laser LS de marque COULTER®, muni de son module de dispersion petit volume ou SVM (125 ml) en suivant les spécifications du constructeur (dans les « *Small Volume Module Operating instructions* »).

Les particules de farine de microalgues sont agglomérées durant leur préparation. Malgré cette agglomération, les granules de farine de microalgues selon l'invention présentent également des propriétés d'écoulement tout à fait satisfaisantes, selon un test A.

Ces propriétés d'écoulement confèrent de nombreux avantages dans la production de produits alimentaires utilisant la farine de microalgues. Par exemple, lors de la réalisation de produits alimentaires de nombreuses mesures précises de quantité de farine doivent être effectuées, et les aliquotes de farine sont souvent préparés de façon automatique. Il est donc indispensable que la farine et plus particulièrement la farine ne microalgues possède une bonne aptitude à l'écoulement, de façon à ne pas motter dans les systèmes automatisés industriels.

Le test A consiste à mesurer le degré de cohésion des granules de farine de microalgues.

Le test A consiste tout d'abord à tamiser les granules de farine de microalgues sur un tamis d'ouverture de maille de 800 µm. Les granules de farine présentant une taille inférieure à 800 µm sont ensuite récupérés, introduits dans un récipient fermé et subissent un mélange par mouvement épicycloïdal à l'aide d'un mélangeur de laboratoire de marque TURBULA type T2C. Par ce mélange, selon leurs propres caractéristiques, les granules de farine de microalgues exprimeront leurs propensions à s'agglomérer ou à se repousser.

Les granules ainsi mélangés sont ensuite déposés sur une colonne de 3 tamis (2000 µm ; 1400 µm ; 800 µm) pour un nouveau tamisage.

Le tamisage terminé, le refus sur chaque tamis est quantifié et le résultat donne une illustration du caractère « cohésif » ou « collant » des granules de farine de microalgues.

Ainsi, une poudre de granules à écoulement libre, donc peu cohésive, ne sera pratiquement pas arrêtée par les tamis de grande ouverture, mais le sera d'autant plus que les mailles desdits tamis seront resserrées.

Le protocole de mesure de la taille de particules selon le test A est le suivant :
- tamiser la quantité de produit nécessaire sur un tamis de 800 µm pour récupérer 50 g de produit de taille inférieure à 800 µm,
- introduire ces 50 g de granules de farine de taille inférieure à 800 µm dans un bocal en verre de contenance de 1 litre (Ref. BVBL Verrerie Villeurbannaise-Villeurbanne France) et refermer le couvercle,
- disposer ce bocal dans le mélangeur TURBULA modèle T2C réglé sur la vitesse de 42 t/mn (Willy A. Bachofen Sarl-Sausheim-France) et mélanger pendant 5 minutes,
- préparer une colonne de 3 tamis (de marque Saulas -Diamètre 200 mm ; Paisy Cosdon - France) qui seront placés sur un tamiseur de marque Fritsch modèle Pulverisette type 00.502 ; détail du montage en partant du bas vers le haut : tamiseur, fond de tamis, tamis de 800 µm, tamis de 1400 µm, tamis de 2000 µm, couvercle du tamiseur.
- déposer la poudre issue du mélange sur le haut de la colonne (tamis de 2000 µm), fermer avec le couvercle du tamiseur et tamiser pendant 5 minutes sur le tamiseur FRITSCH, avec une amplitude 5 en position permanente,
- peser le refus sur chaque tamis.

Les granules de farine de microalgues présentent alors :
- entre 0,5 et 60 % en poids pour le refus à 2.000 µm,
- entre 0,5 et 60 % en poids pour le refus à 1.400 µm, et
- entre 0,5 et 95 % en poids pour le refus à 800 µm.

A titre comparatif, les poudres de farine de microalgues préparées par des technologies de séchage classiques (atomisation simple effet) présentent quant à elles un aspect collant, de faible fluidité, ce qui se traduit par un comportement selon le test A :
- entre 50 et 90 % en poids de refus sur 2.000 µm
- entre 0,5 et 30 % en poids de refus sur 1.400 µm
- entre 5 et 40 % en poids de refus sur 800 µm.

En d'autres termes, une majorité de la poudre de farine de microalgues (plus de 50 % de la poudre) ne parvient pas à franchir le seuil des 2.000 µm, alors qu'initialement tamisée sur 800 µm.

Ces résultats démontrent que les technologies de séchage classiques conduisent plutôt à la fabrication de poudres très cohésives, puisqu'après mélange, mettant en oeuvre peu d'énergie mécanique (durée de tamisage d'à peine 5 mn), des particules inférieures à 800 µm ne parviennent pas à traverser un tamis de 2000 µm, d'une ouverture pourtant 2,5 fois plus grande. Il s'en déduit aisément qu'une poudre classique, présentant un tel comportement, n'est pas facile à mettre en oeuvre dans une préparation où une répartition homogène des ingrédients est recommandée.

Inversement, les farines de microalgues décrites ci-dessus sont plus faciles à mettre en oeuvre car elles sont moins collantes. Ce caractère collant moindre est évident au vu des nombreuses mesures incluant la petite taille des granules, la grande mouillabilité et l'écoulement amélioré.

Les granules de farine de microalgues ne présentent qu'un faible refus (< 50%) sur 2000 µm pour la famille de granules de fine granulométrie et quasiment aucun refus (5%) pour la famille de granules de grosse granulométrie. Il est donc démontré que les particules de farine de microalgues produites selon les méthodes décrites dans la présente invention sont moins collantes que les farines de microalgues préparées selon les méthodes conventionnelles décrites dans l'art antérieur.

Les granules de farine de microalgues sont enfin caractérisés par un degré de mouillabilité remarquable, selon un test B.

La mouillabilité est une propriété technologique très souvent utilisée pour caractériser une poudre remise en suspension dans l'eau, par exemple en industries laitières.

Elle traduit l'aptitude d'une poudre à s'immerger après avoir été déposée à la surface de l'eau (Haugaard Sorensen et al. « Méthodes d'analyse des produits laitiers déshydratés », Niro A/S (ed.), Copenhagen, Denmark, 1978), et reflète ainsi la capacité de la poudre à absorber de l'eau à sa surface (Cayot P. et Lorient D., « Structures et technofonctions des protéines du lait ». Paris : Airlait Recherches: Tec et Doc, Lavoisier, 1998).

La mesure de cet indice consiste classiquement à mesurer le temps nécessaire à une certaine quantité de poudre pour pénétrer dans l'eau à travers sa surface libre au repos. Selon Haugaard Sorensen et al. (1978), une poudre est dite « mouillable » si son IM (Indice de Mouillabilité) est inférieur à 20 secondes.

Il faut également associer à la mouillabilité, l'aptitude au gonflement de la poudre. En effet, lorsqu'une poudre absorbe de l'eau, elle gonfle progressivement. Puis, la structure de la poudre disparaît lorsque les divers constituants sont solubilisés ou dispersés.

Parmi les facteurs influençant la mouillabilité, il y a la présence de grosses particules primaires, la réintroduction des fines, la masse volumique de la poudre, la porosité et la capillarité des particules de poudre ainsi que la présence d'air, la présence de matières grasses à la surface des particules de poudre et les conditions de reconstitution.

Le test B mis au point par la société Demanderesse consiste ici à considérer plus particulièrement le comportement de la poudre de farine de microalgues lorsque mise en contact de l'eau, par la mesure, après un certain temps de contact, de la hauteur de la poudre qui décante lorsque placée à la surface de l'eau.

Le protocole de ce test est le suivant :
- dans un bécher de forme basse de 600 ml (bécher FISCHERBRAND FB 33114), introduire 500 ml d'eau déminéralisée à 20°C,
- placer uniformément 25 g de la poudre de farine de microalgues à la surface de l'eau, sans mélanger,
- observer le comportement de la poudre après 3 h de contact,
- mesurer la hauteur du produit qui a pénétré la surface de l'eau et qui est décanté au fond du bécher.

Une poudre très cohésive, collante, de faible mouillabilité demeurera à la surface du liquide, tandis qu'une poudre de meilleure mouillabilité, moins collante, décantera plus aisément.

Les granules de farine de microalgues présentent alors un degré de mouillabilité, exprimé selon ce test B, par la hauteur du produit décanté dans un bécher, à une valeur comprise entre 0 et 4 cm, de préférence entre 0 et 2 cm, et plus préférentiellement entre 0 et 0,5 cm.

A titre comparatif, la farine de microalgues séchées classiquement par atomisation simple effet se maintient à la surface de l'eau, et ne s'hydrate pas suffisamment pour pouvoir décanter au fond du bécher.

Les granules de farine de microalgues décrits ci-dessus sont également caractérisés par :
- leur densité aérée,
- leur surface spécifique et
- leur comportement après dispersibilité dans l'eau.

La densité aérée est déterminée selon une méthode conventionnelle de mesure de la densité aérée, c'est-à-dire en mesurant la masse d'un récipient vide (en grammes) d'un volume connu, puis en mesurant la masse du même récipient rempli avec le produit à tester.

La différence entre la masse du récipient rempli et la masse du récipient vide, divisée par le volume (en ml) du récipient donne la valeur de la densité aérée.

Pour ce test, le récipient d'une contenance de 100 ml utilisé et le grattoir ainsi que l'appareil de mesure commercialisés par la société HOSOKAWA sous la marque POWDER TESTER type PTE, en appliquant la méthode recommandée dans les « operating Instructions » pour mesurer une densité aérée.

Dans ces conditions, les granules de farine de microalgues présentent une densité aérée comprise entre 0,30 et 0,50 g/ml.

Cette valeur de densité aérée est d'autant plus remarquable que les granules de farine de microalgues conformes à l'invention présentent une densité plus élevée que la farine de microalgues séchées par voie classique. En effet, il est admis que la densité d'un produit sera d'autant plus faible qu'il sera granulé par atomisation, par exemple inférieure à 0,30 g/ml.

Or, quoique granulés, les produits présentent une densité aérée plus élevée qu'attendue.

Les granules de farine de microalgues peuvent également être caractérisés par leur surface spécifique.

On détermine la surface spécifique sur l'ensemble de la distribution granulométrique des granules de farine de microalgues grâce à un analyseur de surface spécifique Quantachrome basé sur un test d'absorption de l'azote sur la surface du produit soumis à l'analyse, réalisé sur appareil SA3100 de chez Beckmann Coulter, en suivant la technique décrite dans l'article BET Surface Area by Nitrogen Absorption de S. BRUNAUER et al. (Journal of American Chemical Society, 60, 309, 1938).

Les granules de farine de microalgues, après dégazage 30 minutes à 30°C sous vide, présentent alors une surface spécifique comprise entre 0,10 et 0,70 m²/g.

A titre comparatif, la farine de microalgues séchées par atomisation classique présente une surface spécifique selon BET de 0,65 m²/g.

Il est donc surprenant de constater que les granules de farine de microalgues, plus denses que la farine de microalgues classique, présentent une surface spécifique d'autant plus faible que leur taille est élevée.

Les granules de farine de microalgues sont susceptibles d'être obtenus par un procédé d'atomisation particulier, qui met en oeuvre des buses de pulvérisation à haute pression dans une tour à flux parallèles qui dirige les particules vers une bande mobile située dans le bas de la tour. La matière est ensuite transportée comme une couche poreuse à travers des zones de post-séchage et de refroidissement, qui lui donnent une structure craquante, comme celle d'un gâteau qui se brise à l'extrémité de la bande. La matière est ensuite mise en oeuvre pour obtenir la taille de particules souhaitée. Pour procéder à la granulation de la farine d'algues, en suivant ce principe d'atomisation, on peut employer par exemple un atomiseur FILTERMAT™ commercialisé par la société GEA NIRO ou un système de séchage TETRA MAGNA PROLAC DRYER™ commercialisé par la société TETRA PAK. De manière surprenante et inattendue, la société Demanderesse a ainsi constaté que la granulation de la farine de microalgues par la mise en oeuvre par exemple de ce procédé FILTERMAT™, permettait non seulement de préparer avec un haut rendement un produit conforme à l'invention sur le plan de la distribution granulométrique et de son aptitude à l'écoulement, mais aussi de lui conférer des propriétés inattendues de mouillabilité sans qu'il ne soit utile d'utiliser d'agents liant de granulation, ni d'agents anti-mottant (bien qu'ils puissent être optionnellement employés). En effet, les procédés décrits antérieurement (telle l'atomisation simple effet) ne permettent pas d'obtenir l'ensemble des caractéristiques souhaitées.

Le procédé de préparation des granules de farine de microalgues (ne faisant pas partie de l'invention) comprend alors les étapes suivantes :
1) préparer une émulsion de farine de microalgues à une matière sèche comprise entre 15 et 40 % en poids sec,
2) introduire cette émulsion dans un homogénéisateur haute pression,
3) la pulvériser dans un atomiseur vertical équipé d'une bande mobile à sa base, et d'une buse haute pression à sa partie supérieure, tout en réglant :
   a) la pression appliquée au niveau des buses de pulvérisation à des valeurs de plus de 100 bars, de préférence entre 100 et de 200 bars, et de préférence encore entre 160 et 170 bars,
   b) la température d'entrée comprise entre 150°C et 250°C, de préférence entre 180°C et 200°C, et
   c) la température de sortie dans cette zone d'atomisation comprise entre 60°C et 120°C, de préférence entre 60°C et 110°C et de préférence encore entre 60°C et 80°C,
4) régler les températures d'entrée de la zone de séchage sur la bande mobile entre 40°C et 90°C, de préférence entre 60°C et 90°C, et la température de sortie entre 40°C et 80°C, et régler les températures d'entrée de la zone de refroidissement à une température entre 10°C et 40°C, de préférence entre 10°C et 25°C, et la température de sortie entre 20°C et 80°C, de préférence entre 20°C et 60°C,
5) collecter les granules de farine de microalgues ainsi obtenus.

La première étape du procédé consiste à préparer une suspension de farine de microalgues, de préférence une farine de microalgues riche en lipides (par exemple de 30% à 70% de préférence de 40% à 60% de lipide par poids sec cellulaire), dans de l'eau à une matière sèche comprise entre 15 et 40 % en poids sec.

Selon un mode préférentiel de mise en oeuvre du procédé de production de la farine de microalgues, on obtient en fin de fermentation, une biomasse pouvant être à une concentration comprise entre 130g/l et 250 g/l, avec une teneur en lipides d'environ 50% en poids sec, une teneur en fibres de 10% à 50% en poids sec, une teneur en protéines de 2% à 15 % en poids sec, et une teneur en sucres inférieure à 10% en poids.

Selon un autre mode de mise en oeuvre du procédé de production de la farine de microalgues, on obtient en fin de fermentation une biomasse pouvant être à une concentration comprise entre 130g/l et 250 g/l, avec une teneur en protéines d'environ 50% en poids sec, une teneur en fibres de 10% à 50% en poids sec, une teneur en lipides de 10% à 20% en poids sec, et une teneur en sucres inférieure à 10% en poids.

La biomasse extraite du milieu de fermentation par tout moyen connu de l'homme du métier est ensuite :
- concentrée (par exemple par centrifugation)
- optionnellement conservée par l'addition de conservateurs standards (benzoate de sodium et sorbate de potassium par exemple),
- broyée cellulairement.

L'émulsion peut ensuite être homogénéisée. Cette homogénéisation haute pression de l'émulsion peut être accomplie dans un dispositif à deux étages, par exemple un homogénéisateur GAULIN commercialisé par la société APV, avec une pression de 100 à 250 bars au premier étage, et 10 à 60 bars au second étage.

La suspension de farine ainsi homogénéisée est ensuite pulvérisée dans un atomiseur vertical équipé d'une bande mobile à sa base, et d'une buse haute pression à sa partie supérieure. La pression appliquée au niveau des buses de pulvérisation est réglée à des valeurs de plus de 100 bars, de préférence entre 100 et de 200 bars, et de préférence encore entre 160 et 170 bars, la température d'entrée est réglée de façon à être comprise entre 150°C et 250°C, de préférence entre 180°C et 200°C, et la température de sortie dans cette zone d'atomisation est réglée de façon à être comprise entre 60°C et 120°C, de préférence entre 60°C et 110°C et de préférence encore entre 60°C et 80°C.

La bande mobile permet de déplacer le matériel à travers des zones de post-séchage et de refroidissement. La températures d'entrée de la zone de séchage sur la bande mobile est réglée entre 40°C et 90°C, de préférence entre 60°C et 90°C, et la température de sortie de la zone de séchage est réglée entre 40°C et 80°C, et la température d'entrée de la zone de refroidissement est réglée entre 10°C et 40°C, de préférence entre 10°C et 25°C, et la température de sortie de la zone de refroidissement est réglée entre 20°C et 80°C, de préférence entre 20°C et 60°C.

La pression appliquée et la température d'entrée de la zone de séchage sont des paramètres importants pour la détermination de la texture du gâteau au niveau la bande mobile et ont donc un impact sur la distribution de la taille des particules.

Les granules de farine de microalgues selon les conditions de l'étape précédente du procédé tombent sur la bande mobile avec une humidité résiduelle comprise entre 2 et 4 %.

Pour amener le degré d'humidité des granules de farine de microalgues à la valeur souhaitée inférieure à 4%, et plus préférentiellement inférieur à 2%, la société Demanderesses a trouvé qu'il fallait respecter ces barèmes de température des zones de séchage et de refroidissement. Optionnellement, un antioxydant (de type Butylhydroxyanisol (BHA), Butylhydroxytoluène (BHT), ou d'autres connus pour une utilisation alimentaire) peuvent être ajoutés avant l'étape de séchage pour préserver la fraîcheur et la conservation.

La dernière étape du procédé consiste enfin à collecter les granules de farine de microalgues ainsi obtenus.

Selon un mode préféré, les granules de farine de microalgues contiennent au moins 10% en poids sec de lipides, de préférence au moins 12% et encore plus préférentiellement de 25 à 35% ou plus en poids sec de lipides.

Dans un mode particulier, les granules de farine de microalgues contiennent au moins 25% de lipides, ou au moins 55% de lipides exprimés en poids sec.

Les granules de farine de microalgues obtenus selon le procédé décrit ci-dessus sont susceptibles de contenir des cellules de microalgues intactes, une mixture de cellules de microalgues intactes et de cellules broyées ou principalement des cellules de microalgues broyées.

Dans un mode de réalisation, une lyse non poussée est souhaitée, c'est-à-dire que le pourcentage de cellules intactes contenues dans les granules de la farine de microalgues est compris entre 25% à 75%.

Selon un autre mode de réalisation, une lyse partielle est souhaitée, c'est-à-dire de 25% à 75% de cellules lysée présentes dans la farine de microalgues.

Selon un autre mode de réalisation, une lyse totale est souhaitée, c'est-à-dire que la farine de microalgues contient 85% ou plus des cellules lysée, de préférence 90% ou plus.

Ainsi selon les applications souhaitées, on choisira une farine de microalgues possédant un taux plus ou moins élevé de cellules lysées.

Dans un mode préférentiel, l'invention est destinée aux produits alimentaires des domaines de la biscuiterie, pâtisserie et viennoiserie.

Dans la présente invention, les termes « produit de cuisson » et « produit de panification » ainsi que les terme « boulangerie », « pâtisseries », « viennoiserie » et « biscuiteries » doivent être interprétés de manière large, comme se référant en général au domaine de la production de produits cuits au four à partir de pâtes fermentées à base d'amidon, ainsi qu'aux domaines de la boulangerie et de la viennoiserie.

Dans ces domaines, les matières grasses d'origine végétale et/ou animale, et plus particulièrement le beurre, occupent une place prépondérante et il est très difficile de les substituer.

Dans la présente invention, le terme « matière grasse d'origine animale et/ou végétale » doit être compris dans son interprétation la plus large et comme désignant par exemple, et de manière non limitative tout produit choisi parmi les beurres, les margarines ou les huiles.

Selon l'article 1er du Décret du 30/12/1988, la dénomination "beurre" est réservée au produit laitier de type émulsion d'eau dans la matière grasse, obtenu par des procédés physiques et dont les constituants sont d'origine laitière. Il doit représenter pour 100 g de produit fini, 82 g au minimum de matière grasse butyrique, 2 g au maximum de matière sèche non grasse et 16 g au maximum d'eau. Il résulte du barattage de la crème de lait, après maturation de celle-ci. Les beurres selon la présente invention peuvent être secs ou gras. Un beurre sec est composé essentiellement de triglycérides renfermant des acides gras à haut point de fusion. Un beurre gras est composé essentiellement des triglycérides renfermant des acides gras à bas point de fusion. Les beurres peuvent également être fractionnés. Pour pallier les différences de plasticité du beurre selon la saison, les industriels ont amélioré le beurre en fractionnant la cristallisation des acides gras. L'intérêt pour le professionnel est évident. Il dispose non seulement toute l'année d'une matière première constante en termes de qualité, mais surtout spécialement adaptée à ses fabrications. L'autre modification réalisée par les industriels est la concentration. On enlève toute l'eau du beurre (16% dans un beurre frais). On obtient un beurre concentré, à 99% en moyenne de matière grasse, qui se conserve très bien. Ce beurre concentré, qui peut être fractionné ou non, est toujours additionné dès sa fabrication d'un traceur afin de le distinguer du beurre frais, qui lui n'est pas concentré. Enfin, le beurre peut également être en poudre. Le beurre a pour principal avantage les valeurs qu'il véhicule, valeurs qui sont identiques à celles développées par l'artisanat : matière première de qualité, produit noble, bénéficiant d'une forte image auprès des consommateurs. De plus, il permet aux produits finis de porter l'appellation « au beurre ». Et en matière de goût, il n'a pas son pareil.

Selon le décret du 30/12/1988, la dénomination "margarine" est réservée au produit obtenu par le mélange de matière grasses et d'eau ou de lait ou de dérivés du lait, se présentant sous la forme d'une émulsion renfermant au moins 82% de matière grasse dont au plus 10% d'origine laitière. Cela dit, le plus fréquemment la margarine est une émulsion huile dans eau complétée des adjuvants de type lécithine de soja.

Selon la présente invention, la matière grasse d'origine végétale désigne également les huiles. Élaborées principalement à partir de plantes oléagineuses, les huiles végétales sont les premiers corps gras consommés dans le monde. On distingue 2 types d'huiles: les huiles fluides extraites principalement de l'olive, d'arachide, de tournesol, de soja, de colza et de germe de maïs qui ont la particularité de rester liquide à 15°C ; et les huiles concrètes extraites à partir de palme, de palmiste et de coprah (noix de coco) qui sont par contre figées et solide à 15°C.

Dans les domaines concernés par la présente invention, les matières grasses d'origine animale et/ou végétale, et plus particulièrement le beurre, doivent posséder des propriétés différentes en fonction des principaux types d'application visées.

Ainsi, pour une application « fourrage et garniture de pâtisseries », les propriétés rhéologiques et organoleptiques des matières grasses utilisées doivent avoir, puisque le produit final est consommé cru, une impression en bouche de « fondant », sans « collant en bouche ». Au niveau texture, la matière grasse étant foisonnée dans ce type de recettes, la formulation doit permettre une introduction d'air aisée et stable dans le temps. Le caractère trop plastique d'une matière grasse, comme par exemple la margarine est un handicap pour cette application, une trop forte cohésion de la matière grasse pouvant en effet diminuer sa capacité au foisonnement.

Pour une application « incorporation » qui regroupe les produits type brioche et cake ou toute autre application dite « pâte jaune », la matière grasse doit être dispersée, souvent rapidement, dans la pâte au cours du pétrissage, elle devra donc être facile à incorporer. La matière grasse doit donc avoir une consistance relativement faible et une texture peu ou pas plastique permettant sa bonne dispersibilité dans la pâte. On recherche donc une matière grasse souple qui se marie intimement aux autres ingrédients, avec un point de fusion généralement bas puisque les pâtes sont travaillées à température ambiante.

Enfin, concernant l'application « feuilletage et pâte levée feuilletée », les matières grasses d'origine utilisées doivent présenter deux propriétés essentielles : un point de fusion élevé et une grande plasticité. La plasticité permet à la matière grasse de s'étaler facilement au laminage mais sans se casser ni se rompre. De plus, une plasticité importante permet également d'être adaptée aux contraintes mécaniques et à l'échauffement subis lors du laminage. Ces particularités conduisent à la capacité à former un film résistant et homogène au cours du laminage. En effet, la technique du feuilletage consiste à intercaler par pliages successifs (tourage et laminage) des couches de pâte (détrempe) et des couches de matière grasse de même épaisseur, ce qui permet, au cours de la cuisson, le développement du produit et l'obtention de feuillets de pâte séparés. Tout l'art du tourier consistera à obtenir des textures de détrempe et de beurre manié les plus proches possible, de manière à favoriser un étalement le plus homogène possible des couches. Les pâtes levées feuilletés (pour croissants et autre type de viennoiseries similaires) sont fabriquées sur le même principe mais de la levure est incorporée dans la détrempe, le tourage est moins important et la pâte ainsi obtenue est placée dans une étuve avant cuisson (« pousse préalable avant cuisson »). Ces pâtes ont une grande friabilité et un développement particulier dû à l'action de la levure incorporée dans la détrempe mais aussi par le développement des feuillets de pâte obtenus au cours de la préparation des pliages successifs de la détrempe avec le beurre.

La Demanderesse a démontré que le beurre végétal selon la présente invention peut remplir toutes les spécificités précitées demandées habituellement aux matières grasses traditionnelles. Ainsi ledit beurre végétal a un très bon comportement technologique, rhéologique, plastique, et conduit à des produits finis d'excellentes qualités, et ce quelle que soit l'application visée. Ce qui en fait un allié principal dans les ateliers, notamment un seul type de matière grasse pour plusieurs applications.

L'invention concerne également un procédé de préparation du beurre végétal caractérisé en ce qu'il comprend:
- un mélange d'une farine de microalgues, d'un liquide potable et d'un agent rétrogradant choisi parmi les amidons natifs, les amidons modifiés et/ou les hydrolysats d'amidon, jusqu'à dissolution complète, et
- un stockage au froid.

Dans un mode préférentiel, le liquide potable est de l'eau et l'agent rétrogradant est une maltodextrine, de préférence une maltodextrine possédant un DE inférieur à 10, et plus préférentiellement encore une maltodextrine possédant un DE inférieur à 5.

Dans un mode préférentiel, ledit procédé de préparation du beurre végétal comprend :
- un premier mélange d'une farine de microalgues et d'un agent rétrogradant, et de préférence une maltodextrine, une maltodextrine possédant un DE inférieur à 10, et plus préférentiellement encore une maltodextrine possédant un DE inférieur à 5,
- une dissolution du mélange précédent dans de l'eau sous agitation jusqu'à dispersion complète,
- un stockage à une température inférieure à 10°C et de préférence inférieure à 5°C pendant une durée supérieure à 5 heures, et de préférence supérieure à 10 heures.

Les caractéristiques particulières des granules de la farine de microalgues utilisée permettent à cette dernière une bonne dissolution lors de sa mise en solution dans l'eau.

Ledit procédé permet d'obtenir un beurre végétal ayant la texture d'un gel pommadé, c'est-à-dire possédant les caractéristiques rhéologiques proches de celles de la matière grasse généralement utilisée (beurre et/ou margarines).

Ledit beurre pommadé est ensuite incorporé dans des recettes de boulangerie, pâtisserie et/ou viennoiserie dans lesquelles il permet de substituer une partie ou la totalité des matières grasses d'origine végétale et/ou animale traditionnellement employées, tout en permettant de répondre aux exigences du procédé de fabrication utilisé.

L'invention concerne également le procédé de préparation d'un produit de boulangerie, pâtisserie et/ou viennoiserie caractérisé en ce qu'il contient un beurre végétal tel que décrit dans le présent document en substitution partielle ou totale des matières grasses d'origine animale et/ou végétale.

Ledit procédé est caractérisé en ce qu'il comprend :
- un mélange des différents ingrédients dont le beurre végétal jusqu'à l'obtention d'une pâte, et
- une cuisson de ladite pâte.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLES

### Exemple 1 : Production de la farine de microalaues

Une souche de *Chlorella protothecoides* (référence UTEX 250) est cultivée dans un fermenteur et selon des techniques connues de l'homme du métier, de façon à ce qu'elle ne produise pas de pigment chlorophyllien. La biomasse résultante est ensuite concentrée de façon à obtenir une concentration finale en cellules de microalguesde 150g/l.

Les cellules sont éventuellement désactivées par traitement thermique à travers une zone HTST (Haute Température / Temps Court) à 85°C pendant 1 minute.

Pour la suite des opérations, la température peut être maintenue sous 8-10°C.

Puis la biomasse lavée est broyée à l'aide d'un broyeur à billes pouvant être de type « bead mill » et plusieurs taux de broyage, notamment de lyse sont alors recherchés : 50% de broyage et 85% de broyage.

Dans un des modes de réalisation, aucun broyage n'est appliqué et le taux de broyage est ainsi nul.

La biomasse ainsi générée et éventuellement broyée peut ensuite être pasteurisée sur une zone HTST (1 minute à 70-80°C) et homogénéisée sous pression dans un homogénéisateur GAUVIN à deux étages (250 bars au 1er étage / 50 bars au second) après ajustement du pH à 7 à la potasse.

Trois lots de farine de microalgues sont ainsi obtenus :
- lot 0% : aucun broyage n'est appliqué ;
- lot 50% : le taux de lyse des cellules après broyage est de 50% ;
- lot 85% : le taux de lyse des cellules après broyage est de 85% ;

Selon les conditions de culture appliquées, la teneur lipidique de la biomasse de microalgues est supérieure à 35%, et la teneur en protéines inférieure à 20%.

### Exemple 2 : Séchage de l'émulsion « huile dans eau » homogénéisée de farine de microalgues

On procède au séchage des trois lots de biomasse obtenue dans l'exemple 1 dans un dispositif FILTERMAT, pour obtenir les granules de farine de microalgues.

Le procédé d'atomisation consiste à pulvériser la suspension homogénéisée à haute pression dans un dispositif de type FILTERMAT commercialisé par la société GEA/NIRO, muni d'une buse d'injection haute pression de type DELAVAN, dans les conditions suivantes :
- la pression est réglée de 160 à 170 bars,
- température d'entrée d'atomisation : 180°C à 200°C,
- température de sortie : 60°C à 80°C,
- température d'entrée de la zone de séchage : 60°C à 90°C,
- température de sortie : 65°C,
- température d'entrée de la zone de refroidissement : 10°C à 20°C

La poudre arrive alors sur la bande avec une humidité résiduelle comprise entre 2 et 4 %.

En sortie de bande : les granules de farines de microalgues présentent une humidité résiduelle comprise entre 1 et 3 %, de l'ordre de 2 %.

### Exemple 3 : Préparation d'un beurre végétal

### Composition du beurre végétal selon l'invention

- Eau : 75g, soit 60%,
- Farine de microalgues à différents taux de broyage : 25 g, soit 20%,
- Maltodextrine de type GLUCIDEX 1 : 25 g, soit 20%.

### Mode opératoire

Sous agitation dans un blender, le mélange de farine de microalgues et de maltodextrines est ajouté dans l'eau.

Le tout est maintenu sous agitation jusqu'à dissolution complète des ingrédients.

Le mélange est ensuite réfrigéré afin que la rétrogradation de l'hydrolysat d'amidon fige le tout sous la forme d'un beurre pommadé apte à se substituer aux matières grasses d'origine végétales et/ou animales. Il faut compter généralement au minimum 12 heures à 4°C.

### Exemple 4 : Préparation de « digestives » biscuits

Un digestive biscuit est une sorte de biscuit anglais ; son nom provient de sa réputation d'antiacide, dû au fait qu'il contenait du bicarbonate de soude aux débuts de leur production.

Le témoin a été réalisé avec la biscuitine™ 500 comme matière grasse. La biscuitine 500 est un mélange de graisses végétales fractionnées et non-hydrogénées commercialisé par la société LODERS CROKLAAN BV.

Les trois essais ont été réalisés en substituant une partie de la matière grasse de départ par le beurre végétal obtenu selon l'exemple 3.

Trois taux de broyages de farine de microalgues ont été testés : 0%, 50% et 85%.

L'essai 4 a été réalisé sans farine de microalgues mais avec un mélange Glucidex 1 + eau. Afin de respecter les ratios, la farine de microalgues a été remplacée par des fibres de pois.

**Composition des biscuits : Tableau 1**

| | **Témoinl** | **Avec beurre végétal** Farine à 0% | **Avec beurre végétal** Farine à 50% | **Avec beurre végétal** Farine à 85% | **Avec Glucidex 1** et sans farine de microalgues |
|---|---|---|---|---|---|
| | | **Essai 1** | **Essai 2** | **Essai 3** | **Essai 4** |
| | **%** | **%** | **%** | **%** | **%** |
| Eau | 6,0% | 5,0% | 5,0% | 5,0% | 5,0% |
| Bicarbonate de sodium | 0,3% | 0,3% | 0,3% | 0,3% | 0,3% |
| Bicarbonate d'ammonium | 0,2% | 0,2% | 0,2% | 0,2% | 0,2% |
| Sucrose | 18,0% | 18,0% | 18,0% | 18,0% | 17,8% |
| Sirop de glucose | 2,5% | 2,5% | 2,5% | 2,5% | 2,5% |
| **Beurre végétal selon l'exemple 3** | **0,0%** | **5,0%** | **5,0%** | **5,0%** | **0%** |
| *Glucidex 1* | *0,0%* | *0,0%* | *0,0%* | *0,0%* | *1,0%* |
| *Eau* | *0,0%* | *0,0%* | *0,0%* | *0,0%* | *3,0%* |
| *Fibre de pois* | *0,0%* | *0,0%* | *0,0%* | *0,0%* | *1,0%* |
| Biscuitine 500 | 13,0% | 8,0% | 8,0% | 8,0% | 7,9% |
| Lécithine de soja | 0,2% | 0,2% | 0,2% | 0,2% | 0,2% |
| Farine de blé | 56,3% | 57,3% | 57,3% | 57,3% | 57,7% |
| Lait écrémé en poudre | 2,5% | 2,5% | 2,5% | 2,5% | 2,5% |
| Sel | 0,3% | 0,3% | 0,3% | 0,3% | 0,3% |
| Sodium pyrophosphaté | 0,2% | 0,2% | 0,2% | 0,2% | 0,2% |
| Arôme de vanille | 0,3% | 0,3% | 0,3% | 0,3% | 0,3% |
| Arôme de beurre | 0,2% | 0,2% | 0,2% | 0,2% | 0,2% |
| *Total :* | **100%** | **100%** | **100%** | **100%** | **100%** |

### Protocole de préparation des biscuits

- Dissoudre le bicarbonate de sodium et le bicarbonate d'ammonium dans l'eau.
- Ajouter le sucre et le sirop de glucose. Mélanger dans un blender pendant une minute sur la vitesse 1.
- Ajouter la biscuitine et la lécithine. Mélanger pendant deux minutes sur la vitesse 2.
- Ajouter le beurre végétal pour les trois essais et le mélange Glucidex 1 + eau + fibre de pois pour l'essai 4.
- Mélanger pendant une minute sur la vitesse 2.
- Ajouter les autres ingrédients sous forme de poudre. Mélanger pendant deux minutes sur la vitesse 1, puis une minute sur la vitesse 1.
- Cuisson sur four à sole à 170°C pendant 9 minutes.

**Analyse des biscuits obtenus : tableau 2**

| | Témoin | Essai 1 | Essai 2 | Essai 3 | Essai 4 |
|---|---|---|---|---|---|
| aw J+3 | 0,21 | 0,30 | 0,26 | 0,21 | 0,16 |
| %H20 J+3 | 3,6 | 4,8 | 4,2 | 3,7 | 3,2 |

Les biscuits témoins et ceux des quatre essais ci-dessus ont été dégustés à l'aveugle par un panel de dégustateurs.

Au niveau de la dureté, les biscuits de l'essai 3 ont été jugés moins durs que ceux des essais 1 et 2, et équivalents à ceux du témoin. Cela dit, les biscuits des essais 1 et 2 ont tout de même été classés comme satisfaisants aux critères de dégustation recherchés.

Les plus durs ont été ceux de l'essai 4 qui contiennent moins de matière grasse et pas de farine de microalgues.

Il semble que le beurre végétal contenant de la farine de microalgues avec un taux de broyage de 85 % donne les meilleurs résultats : les biscuits sont moins durs, aw et l'humidité résiduelle sont plus faibles. Ce sont ceux qui se rapprochent le plus de l'essai témoin.

Ainsi il est possible de substituer une partie des matières grasses d'origine végétale par un beurre végétal selon la présente invention. La réduction de la matière grasse est de 38% dans cet essai.

L'intérêt de la présente invention est ainsi démontré.

### Exemple 5 : Préparation de biscuits « short-bread »

Les Short breads sont des biscuits très riches en matières grasses (≈ 30%) et en sucre. Leur texture est plutôt sableuse et très croustillante. La formule témoin contient comme matières grasses 2/3 d'huile de palme hydrogénée et 1/3 de beurre.

Dans ces essais, l'entièreté du beurre est remplacée par un beurre végétal selon l'invention.

Trois essais ont été réalisés avec les trois taux de broyages de farine de microalgues obtenue selon l'exemple 1 : 0%, 50% et 85%.

**Composition des biscuits : Tableau 3**

| | | Control (31% matière grasse) | Essais avec le beurre végétal avec de la farine de microalgues à différents taux de broyage | | |
|---|---|---|---|---|---|
| | | **Control (g)** | **essai1 (0%) en g** | **essai2 (50%) en g** | **essai3 (85%) en 9** |
| A | Biscuitine 500 | 105 | 105 | 105 | 105 |
| | Beurre | 50 | 0 | 0 | 0 |
| | Beurre végétal | 0 | 50 | 50 | 50 |
| | Sucre | 105 | 105 | 105 | 105 |
| B | Eau | 45 | 45 | 45 | 45 |
| | Extrait de vanille | 10 | 10 | 10 | 10 |
| C | Farine de blé | 180 | 180 | 180 | 180 |
| | Lait en poudre | 3 | 3 | 3 | 3 |
| | Sel | 2 | 2 | 2 | 2 |
| **TOTAL** | | **500** | **500** | **500** | **500** |

### Protocole de préparation des biscuits

- Mélanger les matières grasses et le sucre (partie A) dans un blender pendant 3 minutes en vitesse 3.
- Ajouter l'eau et l'extrait de vanille (partie B) et mélanger pendant deux minutes en vitesse 2.
- Ajouter les poudres (partie C) et mélanger pendant deux minutes en vitesse 2.
- Avec une poche à pâtisserie, former des biscuits arrondis sur une plaque avec approximativement la même taille et la même forme. L'étalement avec une douille ou poche de pâtisserie permet de donner au biscuit une forme enroulée et striée (qui rappelle celle d'un escargot).
- Cuisson sur four à sole à 170°C pendant 9 minutes.

### Analyse des biscuits obtenus

Des mesures d'aw et de teneur en eau ont été réalisées. L'étalement de la pâte, la couleur et la texture ont également été comparés.

Pour l'étalement, on recherche une forme plate et régulière, avec une pâte qui se tient bien à l'étalement et qui ne s'écoule pas.

La surface moyenne est calculée en mesurant la hauteur et la largeur du biscuit et en les multipliant entre elles.

Les dessins sont les nervures laissées par le bord de la douille ou poche à pâtisserie. Ils doivent encore être présents une fois la cuisson effectuée.

**Témoin : tableau 4**

| | Témoin (31% matières grasses) |
|---|---|
| aw J+3 | 0,37 |
| %H20 J+3 | 3,5 |
| aw après séchage 100°C 10min | 0,34 |
| %H20 après séchage 100°C 10mn | 3,7 |
| Etalement | Bel étalement régulier |
| Forme | Forme arrondie |
| Dessin | Dessins bien présents |

**Essais : tableau 5**

| | **essai1 (0%)** | **essai2 (50%)** | **essai3 (85%)** |
|---|---|---|---|
| aw J+3 | 0,44 | 0,52 | 0,48 |
| %H20 J+3 | 5,5 | 6,8 | 6,2 |
| aw après séchage 100°C 10min | 0,31 | 0,35 | 0,33 |
| %H20 après séchage 100°C 10mn | 3,8 | 4,6 | 4,3 |
| Etalement | Bel étalement régulier | Bel étalement régulier | Bel étalement régulier |
| Forme | Forme arrondie | Forme arrondie | Forme arrondie |
| Dessin | Dessin +++ | Dessin ++ | Dessin + |

En parallèle, des essais ont également été réalisés avec une recette contenant de la maltodextrine de type Glucidex 1 en mélange avec de l'eau mais sans farine de microalgues.

Tous les biscuits obtenus (témoin, et essais 1, 2 et 3) présentent un bel étalement lorsqu'on dépose la pâte sur la plaque de cuisson avec la poche de pâtisserie. La forme arrondie est maintenue pendant tout le procédé de cuisson. Concernant les dessins en forme de stries, ils se maintiennent plus ou moins bien sur le dessus du biscuit. Les meilleurs résultats en terme d'aspect visuel sont obtenus pour l'essai 1 contenant le beurre végétal (0% de farine broyée).

Les différents biscuits ont été ensuite goûtés par un panel de dégustateurs.

Les biscuits les plus durs sont ceux qui ont été réalisés avec de la maltodextrine Glucidex 1 mais sans farine de microalgues. Il semble donc que la farine de microalgues apporte un plus en terme de texture dans les biscuits allégés en matière grasse par rapport à une solution Glucidex 1 seule. Les biscuits sont notés comme étant moins durs et plus croustillants, avec une très bonne texture sableuse, rappelant celle conférée par la présence de beurre dans les recettes.

Ainsi, il est possible de substituer une partie des matières grasses d'origine animale par un beurre végétal selon la présente invention. La réduction de la matière grasse est de 30% dans cet essai. Les biscuits obtenus présentent la même texture sableuse et recherchée que les biscuits témoins contenant du beurre.

L'intérêt de la présente invention est ainsi démontré.

### Exemple 6 : Préparation de soft cookies

L'objectif de cet essai est de réduire en matières grasses des cookies tendres (produits plutôt destinés à la Restauration Hors Foyer), c'est-à-dire des cookies provenant de pâtes fraiches ou surgelées qui sont cuits pour être consommés dans la journée. Ces cookies se caractérisent par une texture tendre au coeur et plutôt croustillante sur le dessus et les côtés. Ces produits sont donc plutôt riches en matières grasses et les pâtes sont plus hydratées que les pâtes à biscuits traditionnels.

L'objectif de ces essais est donc de réaliser un beurre végétal selon l'exemple 3, en utilisant des farines de microalgues avec les trois taux de broyages de farine de microalgues obtenue selon l'exemple 1 : 0%, 50% et 85%.

Ces différents beurres végétaux sont ensuite utilisés pour remplacer partiellement la matière grasse de la formule : à savoir 100g de beurre sont remplacés par 100g de beurre végétal.

**Composition des cookies : Tableau 6**

| | **TémoinI** | | **Avec beurre végétal** | | **Avec beurre végétal** | | **Avec beurre végétal** | |
|---|---|---|---|---|---|---|---|---|
| | | | Farine 0% | | Farine 50% | | Farine 85% | |
| | ***g*** | ***%*** | ***g*** | ***%*** | ***g*** | ***%*** | ***g*** | ***%*** |
| **Beurre** | **170,0** | **17,0%** | **70,0** | **7,2%** | **70,0** | **7,2%** | **70,0** | **7,2%** |
| Lécithine de soja | 2,0 | 0,2% | 2,0 | 0,2% | 2,0 | 0,2% | 2,0 | 0,2% |
| Extrait de vanille | 8,0 | 0,8% | 8,0 | 0,8% | 8,0 | 0,8% | 8,0 | 0,8% |
| Eau | 60,0 | 6,0% | 60,0 | 6,2% | 60,0 | 6,2% | 60,0 | 6,2% |
| Beurre végétal | 0,0% | 0,0% | 60,0% | 10,4% | 60,0% | 10,4% | 60,0% | 10,4% |
| Sucrose | 140,0 | 14,0% | 140,0 | 14,4% | 140,0 | 14,4% | 140,0 | 14,4% |
| Sucre brun de canne | 104,0 | 10,4% | 104,0 | 10,7% | 104,0 | 10,7% | 104,0 | 10,7% |
| Farine de blé | 240,0 | 24,0% | 260,0 | 26,8% | 260,0 | 26,8% | 260,0 | 26,8% |
| Amidon de blé | 12,0 | 1,2% | 12,0 | 1,2% | 12,0 | 1,2% | 12,0 | 1,2% |
| Amidon Pregeflo P100 | 12,0 | 1,2% | 12,0 | 1,2% | 12,0 | 1,2% | 12,0 | 1,2% |
| Poudre d'oeufs entiers | 12,0 | 1,2% | 12,0 | 1,2% | 12,0 | 1,2% | 12,0 | 1,2% |
| Levure chimique | 6,0 | 0,6% | 6,0 | 0,6% | 6,0 | 0,6% | 6,0 | 0,6% |
| Sel | 4,0 | 04% | 4,0 | 0,4% | 4,0 | 0,4% | 4,0 | 0,4% |
| Chips de chocolat | 230,0 | 23,0% | 180,0 | 18,6% | 180,0 | 18,6% | 180,0 | 18,6% |
| **TOTAL** | **1000,0** | **100%** | **970,0** | **100%** | **970,0** | **100%** | **970,0** | **100%** |

### Protocole de préparation des cookies

- Mélanger les matières grasses, la lécithine, l'eau et l'extrait de vanille dans un blender pendant 2 minutes en vitesse 1.
- Ajouter toutes les poudres et mélanger pendant deux minutes en vitesse 2.
- Ajouter les chips ou inclusions de chocolat.
- Utiliser une cuillère à glace pour former les cookies sur une plaque de pâtisserie.
- Cuisson dans un four à 175°C pendant 6 minutes.

**Analyse des produits finis : tableau 7**

| **Valeurs estimées pour 100g** | **Témoin** | | **Recette avec beurre végétal** | | **Différence % par rapport au témoin** |
|---|---|---|---|---|---|
| Calories (kCal/kJ) | 481 | 2010 | 434 | 1813 | -9,8 |
| Protéines | 5,3 | | 5,5 | | 4,3 |
| Matières grasses | 23,9 | | 16,6 | | -30,6 |
| Carbohydrates | 61,1 | | 65,6 | | +7,3 |
| *...dont DP1,2* | 38,0 | | 39,2 | | +3,2 |
| Fibres | 2,4 | | 2,9 | | +21,1 |
| ... *fibres insolubles* | 2,4 | | 2,7 | | +12,2 |
| ... *fibres solubles* | *0,0* | | *0,2* | | |
| Graisses saturées | 15,4 | | 9,7 | | -36,9 |
| Graisses monoinsaturées | 6,7 | | 5,3 | | -21,1 |
| Graisses polyinsaturées | 1,2 | | 1,0 | | -15,5 |
| Cholestérol | 67,8 | | 44,6 | | -34,2 |

Les cookies contenant le beurre végétal selon l'invention présentent une charge calorique inférieure par rapport aux cookies témoins. De plus, l'apport de mauvaises graisses et de cholestérol est également diminué de manière significative.

Les cookies ont également été testés par un jury de dégustateurs. Les trois essais donnent des cookies très satisfaisants en termes de texture finale et de goût.

D'autres essais ont consisté à congeler les cookies une fois leur modelage réalisé. Tous les cookies ont pu être formés et congelés sans soucis. Il est ensuite possible de les passer au four sans décongélation préalable en adaptant le temps de cuisson à douze minutes. Les cookies résultats sont également jugés très moelleux et très bons.

Le beurre végétal selon la présente invention donne des résultats intéressants dans la réduction en matières grasses des soft cookies. L'intérêt réside surtout dans la texture tendre du cookie qui est même améliorée par rapport à la recette témoin.

Dans cet essai, le taux de broyage de la farine de microalgues entrant dans la composition du beurre végétal n'a aucune incidence sur le résultat final. Les trois taux de broyage testés donnent des résultats similaires et très satisfaisants.

L'intérêt de la présente invention est ainsi démontré.

### Exemple 7 : Réalisation de croissants

Le but de cet exemple est de réaliser des croissants avec un beurre végétal contenant de la farine de microalgues (taux de broyage de 0% et 85%) dans le but d'améliorer le profil nutritionnel des croissants au beurre. Ces croissants sont ensuite comparés à la formule témoin de croissants avec du beurre de tourage.

Dans cet essai une partie du beurre de départ a été remplacé par le beurre végétal selon l'invention, dans le but d'alléger le profil nutritionnel des croissants.

**Composition des croissants : Tableau 8**

| | **Croissants témoins** | | **Croissants allégés** | |
|---|---|---|---|---|
| | *g* | *%* | *g* | *%* |
| Farine de blé | 980 | 41,0% | 980 | 41,0% |
| Gluten | 20 | 0,8% | 20 | 0,8% |
| Sel | 25 | 1,0% | 25 | 1,0% |
| Levure sèche (OSMO) | 16 | 0,7% | 16 | 0,7% |
| Sucrose | 110 | 4,6% | 110 | 4,6% |
| Œufs entiers | 100 | 4,2% | 100 | 4,2% |
| Acide ascorbique | 0,2 | 0,01% | 0,2 | 0,01% |
| Nutrilife AM17 | 0,2 | 0,01% | 0,2 | 0,01% |
| Lametop 300 | 3 | 0,1% | 3 | 0,1% |
| Prefera SSL 600 | 5 | 0,2% | 5 | 0,2% |
| Eau | 480 | 20,1% | 480 | 20,1% |
| Beurre | 650 | 27,2% | 487 | 20,4% |
| Beurre végétal selon l'invention | 0 | 0,0% | 163 | 6,8% |
| *Total :* | **2389,4** | ***100%*** | ***2389,4*** | ***100%*** |

La formule pour la détrempe dans laquelle est intégrée le beurre végétal est la même pour les croissants témoins (beurre de tourage classique à 84% de MG (matière grasse)) et pour les croissants dits allégés en matière grasse. On utilise les mêmes proportions pour réaliser le feuilletage (580g de pâte=détrempe pour 215g de beurre ou de mélange beurre et beurre végétal).

### Protocole de préparation des croissants

- Dans un pétrisseur, mélanger toutes les poudres pendant 30 secondes en vitesse 1.
- Ajouter l'eau et les autres ingrédients liquides et mélanger pendant 10 minutes en vitesse 2.
- Laisser reposer au réfrigérateur pendant 2 heures.
- Procéder à un laminage des beurres (épaisseur 10 mm).
- Procéder à un laminage de la pâte (épaisseur de 8mm) et insérer le beurre dans la pâte. Replier.
- Procéder au laminage de l'ensemble (d'abord 20 mm, puis 12mm, puis 8 mm et enfin 6,5 mm).
- Procéder à un « tour simple » de l'ensemble.
- Procéder au laminage de l'ensemble (d'abord 20 mm, puis 12mm, puis 8 mm et enfin 6,5 mm).
- Procéder à un « tour double » de l'ensemble.
- Laisser reposer 30 minutes au réfrigérateur.
- Procéder au laminage de l'ensemble (d'abord 20 mm, puis 12mm, puis 8 mm et enfin 6,5 mm).
- Procéder à un « tour simple » de l'ensemble.
- Procéder au laminage de l'ensemble (d'abord 20 mm, puis 12mm, puis 8 mm et enfin 6,5 mm).
- Procéder à un « tour double » de l'ensemble.
- Procéder à un dernier laminage jusqu'à obtention d'une épaisseur de pâte de 4 mm.
- Former les croissants.
- Apprêt ou pousse en étuve à 26°C, 75% HR pendant 1h20min.
- Cuisson au four à 190°C pendant 25 minutes.

### Remarques sur le pétrissage

La détrempe se forme de façon classique. Elle est souple et bien manipulable.

Au niveau de la mise en forme des croissants, de meilleurs résultats sont obtenus avec le beurre végétal contenant de la farine de microalgues non lysées.

**Analyse des croissants : tableau 9**

| | **Témoin beurre** | **Avec beurre végétal farine à 0%** |
|---|---|---|
| **Calories (kCal/kJ)** | **380 kCal /1589 kJ** | **342 kCal /1428 kJ** |
| Protéines | 6,1 | 6,1 |
| **Teneur en matières grasses** | **23,6** | **19,1** |
| Carbohydrates | 36,0 | 36,3 |
| *Dont DP 1, 2* | *5,0* | *5,1* |
| Fibres totales | 0,8 | 1,3 |
| | | |
| | **Réduction matière grasse** | **19,1%** |
| | **Réduction calorique** | **10,0%** |

Les croissants obtenus ont été dégustés par un jury entrainés et ont été comparés avec les croissants témoins « pur beurre ». Leur texture a été jugée feuilletée et légère et leur goût très proche du goût des croissants témoins. En d'autres termes, les croissants contenant le beurre végétal selon la présente invention ont été jugés très bons en termes de visuel, de couleur, de texture et de goût.

Ainsi, il est possible de substituer une partie des matières grasses d'origine animale par un beurre végétal selon la présente invention. La réduction de la matière grasse est de 19% dans cet essai. Les croissants obtenus sont similaires en terme de qualité aux croissants obtenus selon la recette pur beurre, ces derniers étant beaucoup plus caloriques.

### Exemple 8 : Préparation de pâte brisée

### Composition de la pâte brisée

- 500g de farine
- 200g de beurre végétal préparé selon l'exemple 3
- 10g de sel
- 100g de sucre
- 110g d'oeuf
- 50g d'eau

### Protocole de préparation

- Bien mélanger les poudres avec la matière grasse dans un blender pendant 3 min en vitesse 2.
- Ajouter les oeufs et l'eau et mélanger le tout pendant deux minutes en vitesse 2.
- Etaler la pâte, la garnir et faire cuire le tout.

En parallèle, la même recette a été préparée avec 200 gr de beurre d'origine animale.

Les deux pâtes ont été cuites à blanc et testées à l'aveugle.

Aucune différence significative n'a pu être relevée entre les deux.

Cette recette permet une substitution totale des matières grasses d'origine animale et une réduction d'environ 20% de la matière grasse.

L'intérêt de la présente invention est ainsi démontré.

## Revendications

1. Beurre végétal **caractérisé en ce qu'**il contient de la farine de microalgues, un liquide potable et un agent rétrogradant, choisi parmi les amidons natifs, les amidons modifiés et/ou les hydrolysats d'amidon.

2. Beurre végétal selon la revendication précédente, **caractérisé en ce que** l'agent rétrogradant est choisi parmi les hydrolysats d'amidon.

3. Beurre végétal selon l'une quelconque des revendications précédentes, **caractérisé en ce que** l'agent rétrogradant est une maltodextrine, de préférence une maltodextrine possédant un DE inférieur à 10, et encore plus préférentiellement une maltodextrine possédant un DE inférieur à 5.

4. Beurre végétal selon l'une quelconque des revendications précédentes, **caractérisé en ce qu'**il contient de 0,5 à 50% de farine de microalgues, de 5 à 80% de liquide potable et de 0,5 à 50% d'un agent rétrogradant.

5. Beurre végétal selon la revendication 4, **caractérisé en ce qu'**il contient de 5 à 20% de farine de microalgues, de 50 à 75% de liquide potable et de 5 à 20% d'un agent rétrogradant.

6. Beurre végétal l'une quelconque des revendications précédentes, **caractérisé en ce que** le liquide potable est choisi parmi l'eau, les jus de fruits, les nectars de fruits, les jus de légumes, les nectars de légumes, les sodas, et de préférence de l'eau.

7. Beurre végétal selon l'une quelconque des revendications précédentes, **caractérisé en ce que** la farine de microalgues est sous forme de granules possédant une ou plusieurs des caractéristiques suivantes, de préférence les trois :
- une distribution granulométrique monomodale, mesurée sur un granulomètre laser LS de marque COULTER®, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2.000 µm, comprises entre 0,5 et 60 % en poids pour le refus à 1.400 µm et comprises entre et 0,5 et 95 % en poids pour le refus à 800 µm,
- un degré de mouillabilité, exprimé selon un test B, par la hauteur du produit décanté dans un bêcher à une valeur comprise entre 0 et 4 cm, de préférence entre 0 et 2 cm, et plus préférentiellement entre 0 et 0,5 cm.

8. Beurre végétal selon l'une quelconque des revendications précédentes, dans lequel la farine de microalgues est une farine dans laquelle les microalgues sont du genre *Chlorella,* et plus particulièrement de l'espèce *Chlorella protothecoides.*

9. Beurre végétal selon l'une quelconque des revendications précédentes, **caractérisé en ce que** la biomasse de microalgues contient au moins 12%, au moins 25%, au moins 50%, ou au moins 75% en poids sec de lipides.

10. Procédé de préparation d'un beurre végétal selon l'une quelconque des revendications précédentes, **caractérisé en ce qu'**il comprend:
- un mélange d'une farine de microalgues, d'un liquide potable et d'un agent rétrogradant choisi parmi les amidons natifs, les amidons modifiés et/ou les hydrolysats d'amidon, jusqu'à dissolution complète, et
- un stockage au froid.

11. Procédé de préparation d'un beurre végétal selon la revendication précédente, **caractérisé en ce qu'**il comprend :
- un premier mélange d'une farine de microalgues et d'un agent rétrogradant, et de préférence une maltodextrine, une maltodextrine possédant un DE inférieur à 10, et plus préférentiellement encore une maltodextrine possédant un DE inférieur à 5,
- une dissolution du mélange précédent dans de l'eau sous agitation jusqu'à dispersion complète, et
- un stockage à une température inférieure à 10°C et de préférence inférieure à 5°C pendant une durée supérieure à 5 heures, et de préférence supérieure à 10 heures.

12. Procédé de préparation d'un produit de boulangerie, pâtisserie et/ou viennoiserie **caractérisé en ce qu'**il contient un beurre végétal selon l'une quelconque des revendications 1 à 8 en substitution partielle ou totale des matières grasses d'origine animale et/ou végétale.

13. Procédé de préparation d'un produit de boulangerie selon la revendication précédente, **caractérisé en ce qu'**il comprend:
- un mélange des différents ingrédients jusqu'à l'obtention d'une pâte, et
- une cuisson de ladite pâte.

## Patentansprüche

1. Pflanzliche Butter, **dadurch gekennzeichnet, dass** sie Mikroalgenmehl, eine trinkbare Flüssigkeit und ein Retrogradationsmittel, ausgewählt aus nativen Stärken, modifizierten Stärken und/oder Stärkehydrolysaten, enthält.

2. Pflanzliche Butter gemäß dem vorhergehenden Anspruch, **dadurch gekennzeichnet, dass** das Retrogradationsmittel aus Stärkehydrolysaten ausgewählt ist.

3. Pflanzliche Butter gemäß einem der vorhergehenden Ansprüche, **dadurch gekennzeichnet, dass** das Retrogradationsmittel ein Maltodextrin, bevorzugt ein Maltodextrin mit einem Dextrose-Äquivalent (DE) unter 10 und noch bevorzugter ein Maltodextrin mit einem DE unter 5 ist.

4. Pflanzliche Butter gemäß einem der vorhergehenden Ansprüche, **dadurch gekennzeichnet, dass** sie 0,5 bis 50% Mikroalgenmehl, 5 bis 80% trinkbare Flüssigkeit und 0,5 bis 50% eines Retrogradationsmittels enthält.

5. Pflanzliche Butter gemäß Anspruch 4, **dadurch gekennzeichnet, dass** sie 5 bis 20% Mikroalgenmehl, 50 bis 75% trinkbare Flüssigkeit und 5 bis 20% eines Retrogradationsmittels enthält.

6. Pflanzliche Butter gemäß einem der vorhergehenden Ansprüche, **dadurch gekennzeichnet, dass** die trinkbare Flüssigkeit aus Wasser, Fruchtsäften, Fruchtnektaren, Gemüsesäften, Gemüsenektaren, Limonaden und bevorzugt aus Wasser ausgewählt ist.

7. Pflanzliche Butter gemäß einem der vorhergehenden Ansprüche, **dadurch gekennzeichnet, dass** das Mikroalgenmehl in Form von Granulaten vorliegt, die ein oder mehrere nachfolgende Merkmale, bevorzugt die drei Merkmale, besitzen:
- eine monomodale granulometrische Verteilung, gemessen auf einem LS Laser-Granulometer der Marke COULTER®, zwischen 2 und 400 µm, zentriert auf einen Partikeldurchmesser (Dmode) zwischen 5 und 15 µm,
- Fließwerte, bestimmt nach einem Test A, zwischen 0,5 und 60 Gew.-% für den Siebrückstand bei 2.000 µm, zwischen 0,5 und 60 Gew.-% für den Siebrückstand bei 1.400 µm und zwischen 0,5 und 95 Gew.-% für den Siebrückstand bei 800 µm,
- einen Grad an Benetzbarkeit, ausgedrückt nach einem Test B, mithilfe der Höhe des abgesetzten Produkts in einem Becherglas mit einem Wert zwischen 0 und 4 cm; bevorzugt zwischen 0 und 2 cm und noch bevorzugter zwischen 0 und 0,5 cm.

8. Pflanzliche Butter gemäß einem der vorhergehenden Ansprüche, wobei das Mikroalgenmehl ein Mehl von Mikroalgen der Gattung *Chlorella* und insbesondere der Spezies *Chlorella protothecoides* ist.

9. Pflanzliche Butter gemäß einem der vorhergehenden Ansprüche, **dadurch gekennzeichnet, dass** die Biomasse der Mikroalgen wenigstes 12 Trockengew.-%, wenigstens 25 Trockengew.-%, wenigstens 50 Trockengew.-% oder wenigstens 75 Trockengew.-% Lipide enthält.

10. Verfahren zur Herstellung einer pflanzlichen Butter gemäß einem der vorhergehenden Ansprüche, **dadurch gekennzeichnet, dass** es umfasst:
- Mischen eines Mikroalgenmehls, einer trinkbaren Flüssigkeit und eines Retrogradationsmittels, ausgewählt aus nativen Stärken, modifizierten Stärken und/oder Stärkehydrolysaten, bis zur vollständigen Auflösung, und
- Aufbewahrung im Kalten.

11. Verfahren zur Herstellung einer pflanzlichen Butter gemäß dem vorhergehenden Anspruch, **dadurch gekennzeichnet, dass** es umfasst:
- zuerst Mischen eines Mikroalgenmehls und eines Retrogradationsmittels, bevorzugt eines Maltodextrins, eines Maltodextrins mit einem DE unter 10 und noch bevorzugter eines Maltodextrins mit einem DE unter 5,
- Auflösen der vorstehenden Mischung in Wasser unter Rühren bis zur vollständigen Dispergierung, und
- Aufbewahrung bei einer Temperatur unter 10°C und bevorzugt unter 5°C über einen Zeitraum von mehr als 5 Stunden und bevorzugter von mehr als 10 Stunden.

12. Verfahren zur Herstellung einer Backware, eines Konditoreiprodukts und/oder einer Feinbackware, **dadurch gekennzeichnet, dass** sie/es eine pflanzliche Butter gemäß einem der Ansprüche 1 bis 8 als partiellen oder vollständigen Ersatz von Fetten tierischen und/oder pflanzlichen Ursprungs enthält.

13. Verfahren zur Herstellung einer Backware gemäß dem vorhergehenden Anspruch, **dadurch gekennzeichnet, dass** es umfasst:
- Mischen verschiedener Bestandteile bis zum Erhalt eines Teigs, und
- Backen besagten Teigs.

## Claims

1. A vegetable butter **characterized in that** it contains microalgal flour, a drinkable liquid and a retrogradation agent chosen from native starches, modified starches and/or starch hydrolyzates.

2. The vegetable butter as claimed in the preceding claim, **characterized in that** the retrogradation agent is chosen from starch hydrolyzates.

3. The vegetable butter as claimed in either one of the preceding claims, **characterized in that** the retrogradation agent is a maltodextrin, preferably a maltodextrin having a DE less than 10, and even more preferentially a maltodextrin having a DE less than 5.

4. The vegetable butter as claimed in any one of the preceding claims, **characterized in that** it contains from 0.5% to 50% of microalgal flour, from 5% to 80% of drinkable liquid and from 0.5% to 50% of a retrogradation agent.

5. The vegetable butter as claimed in claim 4, **characterized in that** it contains from 5% to 20% of microalgal flour, from 50% to 75% of drinkable liquid and from 5% to 20% of a retrogradation agent.

6. The vegetable butter as claimed in any one of the preceding claims, **characterized in that** the drinkable liquid is chosen from water, fruit juices, fruit nectars, vegetable juices, vegetable nectars, and sodas, and preferably water.

7. The vegetable butter as claimed in any one of the preceding claims, **characterized in that** the microalgal flour is in the form of granules having one or more of the following characteristics, preferably all three:
- a monomodal particle size distribution, measured on a Coulter® LS laser particle size analyzer, of between 2 and 400 µm, centered on a particle diameter (D mode) between 5 and 15 µm,
- flow grades, determined according to a test A, between 0.5% and 60% by weight for the oversize at 2000 µm, between 0.5% and 60% by weight for the oversize at 1400 µm and between 0.5% and 95% by weight for the oversize at 800 µm,
- a degree of wettability, expressed according to a test B, by the height of the product decanted in a beaker, at a value of between 0 and 4 cm, preferably between 0 and 2 cm, and more preferentially between 0 and 0.5 cm.

8. The vegetable butter as claimed in any one of the preceding claims, wherein the microalgal flour is a flour in which the microalgae are of the *Chlorella* genus, and more particularly of the *Chlorella protothecoides* species.

9. The vegetable butter as claimed in any one of the preceding claims, **characterized in that** the microalgal biomass contains at least 12%, at least 25%, at least 50% or at least 75% by dry weight of lipids.

10. A process for preparing a vegetable butter as claimed in any one of the preceding claims, **characterized in that** it comprises:
- mixing a microalgal flour, a drinkable liquid and a retrogradation agent chosen from native starches, modified starches and/or starch hydrolyzates, until complete dissolution is obtained, and
- cold storage.

11. The process for preparing a vegetable butter as claimed in the preceding claim, **characterized in that** it comprises:
- a first mixing of a microalgal flour and a retrogradation agent, and preferably a maltodextrin, a maltodextrin having a DE less than 10, and even more preferentially a maltodextrin having a DE less than 5,
- dissolution of the preceding mixture in water with stirring until complete dispersion is obtained, and
- storage at a temperature below 10°C and preferably below 5°C for a period greater than 5 hours, and preferably greater than 10 hours.

12. A process for preparing a breadmaking, patisserie and/or Viennese pastry product, **characterized in that** it contains a vegetable butter as claimed in any one of claims 1 to 8, as partial or total replacement for fats of animal and/or vegetable origin.

13. The process for preparing a breadmaking product as claimed in the preceding claim, **characterized in that** it comprises:
- mixing the various ingredients until a dough is obtained, and
- baking said dough.
